(19) Europäisches Patentamt
European Patent Office
Office européen des brevets

(11) **EP 3 564 029 A1**

(12) **EUROPEAN PATENT APPLICATION**
published in accordance with Art. 153(4) EPC

(43) Date of publication:
**06.11.2019 Bulletin 2019/45**

(21) Application number: **17886111.8**

(22) Date of filing: **27.12.2017**

(51) Int Cl.:
**B32B 15/08** (2006.01)   **B29C 43/18** (2006.01)
**B29C 43/28** (2006.01)   **B29C 65/40** (2006.01)
**C08J 5/12** (2006.01)   **C08J 5/24** (2006.01)

(86) International application number:
**PCT/JP2017/047041**

(87) International publication number:
**WO 2018/124215 (05.07.2018 Gazette 2018/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **28.12.2016 JP 2016256617
31.03.2017 JP 2017073196**

(71) Applicant: **NIPPON STEEL Chemical & Material
Co., Ltd.
Tokyo 103-0027 (JP)**

(72) Inventors:
• **TAKAHASHI Hiroyuki
Tokyo 1030027 (JP)**
• **ANDOH Hideki
Tokyo 101-0021 (JP)**

(74) Representative: **Becker Kurig Straus
Patentanwälte
Bavariastrasse 7
80336 München (DE)**

(54) **METAL/FIBER-REINFORCED RESIN MATERIAL COMPOSITE BODY, METHOD FOR PRODUCING SAME AND BONDING SHEET**

(57) This metal-FRP composite body 100 comprises a metal member 101, an FRP layer 102 and a bonding resin layer 103 that is interposed between the metal member 101 and the FRP layer 102. The bonding resin layer 103 is a solidified product of a phenoxy resin (A) by itself, or alternatively, a cured product of a bonding resin composition that contains 50 parts by weight or more of the phenoxy resin (A) in 100 parts by weight of the resin components; and the bonding resin layer 103 firmly bonds the metal member 101 and the FRP layer 102 to each other. The bonding resin composition may additionally contain 5-85 parts by weight of an epoxy resin (B) relative to 100 parts by weight of the phenoxy resin (A), and a crosslinking agent (C) that contains an acid dianhydride.

FIG. 1

EP 3 564 029 A1

**Description**

[Technical Field]

The present invention relates to, for example, a metal/fiber-reinforced resin material composite body in which a metal member made of a steel material and a resin material are laminated, a method for producing the same, and a bonding sheet.

[Background Art]

Fiber-reinforced plastics (FRP) made of reinforced fibers such as glass fibers and carbon fibers, and a matrix resin are widely used across consumer goods and industrial applications because they are lightweight and have excellent mechanical characteristics. In particular, in the automobile industry, since reduction in a vehicle body weight contributes greatly to improving performance and fuel consumption, replacement of steel materials that have mainly been used hitherto with a carbon fiber reinforced plastic (CFRP) or a composite material of a metal member and a CFRP is being actively studied.

When a part or structure in which a CFRP and a metal member are combined is produced, in order to integrate a plurality of members, a process of adhering members or materials is necessary, and an adhesion method using an epoxy resin type thermosetting bonding agent is generally known.

In addition, in recent years, in addition to a thermosetting resin such as an epoxy resin, a thermoplastic resin has also been studied for a bonding agent for combining a matrix resin of a fiber-reinforced resin material and a metal member in order to improving the processability and recyclability. Here, regarding a method of adhering and bonding a fiber-reinforced resin material and a metal member, the development of a technique for strengthening mainly adhesion between a metal member and a bonding agent has been actively performed.

For example, Patent Literature 1 and Patent Literature 2 disclose techniques in which a bonding surface of a metal member is subjected to a surface roughening treatment to have specific surface shape parameters, a hard and highly crystalline thermoplastic resin is injected and molded, a bonding layer of an epoxy resin is provided on a metal member, and the bonding strength between the metal member and a CFRP is improved. However, in these techniques, a roughened surface on a metal member surface that is chemically etched to have a special surface microstructure is filled with a hard and highly crystalline thermoplastic resin, and thus strength is exhibited. Therefore, a special treatment needs to be performed for roughening and rust prevention, and also, during combining, since it is necessary to perform a high temperature process due to problems of the melt viscosity and a high melting point, there are problems regarding productivity and costs.

Patent Literature 3 discloses a composite body of a reinforced fiber base material and a metal in which a bonding resin such as an epoxy resin is impregnated with a surface of a carbon fiber base material adhered to a metal member, and a thermoplastic resin is impregnated with the other surface to prepare a prepreg. According to this method, it is possible to provide an integrated and molded article having strong adhesion strength even when different members such as a fiber-reinforced resin material and a metal member are adhered. However, in this method, an epoxy type thermosetting resin is used for a bonding agent layer, reinforced fibers are caused to penetrate into the bonding agent layer, and thus adhesion between a fiber-reinforced sheet and a metal layer is maintained. Therefore, a non-woven fabric made of fibers with a specific length need to be used as a reinforced fiber base material, and the reinforcing effect is limited compared to a unidirectional fiber-reinforced material and a cloth material.

In addition, Patent Literature 4 discloses a method of producing a sandwich structure with a steel plate using a CFRP molding material using a polyurethane resin matrix. In the material of this literature, favorable moldability of a thermoplastic polyurethane resin is used, a crosslinking reaction is caused in a polyurethane resin after curing to form a thermosetting resin, and thereby high strength is achieved. However, since the polyurethane resin has low heat resistance, there are problems that it is difficult to apply it to members exposed to a high temperature, and its application is limited.

In addition, Patent Literature 5 discloses that a powder of a phenoxy resin or a resin composition in which a crystalline epoxy resin and an acid anhydride as a crosslinking agent are added to a phenoxy resin is applied to a reinforced fiber base material by a powder coating method to produce a prepreg, and this prepreg is molded and cured by heating and pressing to form a CFRP. In addition, in Patent Literature 5, it is suggested that an aluminum foil and a stainless steel foil can be laminated on the CFRP. However, in Patent Literature 5, since there is no example related to a composite body of a CFRP and a metal member, the mechanical strength such as the bending strength for the composite body has not been studied.

In addition, Patent Literature 6 proposes a method of producing a structure part for a vehicle body in which a composite material composed of a flat carrier material including a metal and a fiber-reinforced thermoplastic material and a support material formed of a thermoplastic material is heated, a rib structure is formed on the support material, and the carrier material is formed into a three-dimensional part.

In addition, Patent Literature 7 proposes a fiber-reinforced resin intermediate material which is used by being heated and pressurized in a laminated state and in which a reinforced fiber base material has voids opening on the outer surface, and a resin in the form of powder is in a semi-impregnated state.

[Citation List]

[Patent Literature]

[Patent Literature 1]
PCT International Publication No. WO2009/116484
[Patent Literature 2]
Japanese Unexamined Patent Application Publication No. 2011-240620
[Patent Literature 3]
Japanese Unexamined Patent Application Publication No. 2016-3257
[Patent Literature 4]
Japanese Unexamined Patent Application Publication No. 2015-212085
[Patent Literature 5]
PCT International Publication No. WO2016/152856
[Patent Literature 6]
Published Japanese Translation No. 2015-536850 of the PCT International Publication
[Patent Literature 7]
Japanese Patent No. 5999721

[Summary of Invention]

[Technical Problem]

The present invention provides a metal/fiber-reinforced resin material composite body in which a metal member and a fiber-reinforced resin material are firmly adhered and which is lightweight and has excellent processability and can be produced by a simple method and is inexpensive.

[Solution to Problem]

The inventors conducted extensive studies and as a result, found that it is possible to address the above problems by adhering a metal member and a fiber-reinforced resin material using a solidified product of a phenoxy resin (A) alone or a cured product of a bonding resin composition containing 50 parts by weight or more of a phenoxy resin (A) in 100 parts by weight of resin components, and thereby completed the present invention.

In a first aspect of the present invention, a metal/fiber-reinforced resin material composite body includes a metal member; a first fiber-reinforced resin material that is combined with the metal member; and a bonding resin layer which is laminated on at least one surface of the metal member and interposed between the metal member and the first fiber-reinforced resin material for bonding them together.

In addition, in the first aspect of the present invention, in the metal/fiber-reinforced resin material composite body, the bonding resin layer contains a solidified product of a phenoxy resin (A) alone or a cured product of a bonding resin composition containing 50 parts by weight or more of a phenoxy resin (A) in 100 parts by weight of resin components.

In the first aspect of the present invention, in the metal/fiber-reinforced resin material composite body, the bonding resin layer may be a second fiber-reinforced resin material including the solidified product as a matrix resin, or including the cured product and a reinforced fiber base material contained in the matrix resin.

In the first aspect of the present invention, in the metal/fiber-reinforced resin material composite body, the bonding resin composition may be a crosslinkable bonding resin composition which further contains an epoxy resin (B) in a range of 5 to 85 parts by weight with respect to 100 parts by weight of the phenoxy resin (A) and a crosslinking agent (C) containing an acid dianhydride. In this case, the cured product may be a cross-linked cured product and a glass transition temperature (Tg) thereof may be 160 °C or higher.

In the metal/fiber-reinforced resin material composite body of the first aspect of the present invention, the material of the metal member may be a steel material, an iron alloy or aluminum.

In a second aspect of the present invention, a metal/fiber-reinforced resin material composite body includes a metal member; a first fiber-reinforced resin material that is combined with the metal member; and a bonding resin layer which is laminated on at least one surface of the metal member and interposed between the metal member and the first fiber-reinforced resin material for bonding them together.

In the second aspect of the present invention, in the metal/fiber-reinforced resin material composite body, the bonding resin layer includes a cured product in a first cured state using a bonding resin containing 50 parts by weight or more of a phenoxy resin (A) in 100 parts by weight of resin components

In addition, in the second aspect of the present invention, in the metal/fiber-reinforced resin material composite body, before and after the bonding resin changes from a cured product in a first cured state to a cross-linked cured product in a second cured state due to heating, a glass transition temperature (Tg) varies.

In the second aspect of the present invention, in the metal/fiber-reinforced resin material composite body, the bonding resin layer may be a second fiber-reinforced resin material containing a reinforced fiber base material in a matrix resin, and the matrix resin may be the cured product in a first cured state.

In a third aspect of the present invention, a bonding sheet bonds a metal member and a fiber-reinforced resin material.

In addition, in the third aspect of the present invention, the bonding sheet is a prepreg which includes a bonding resin composition that contains a phenoxy resin (A) alone or 50 parts by weight or more of a phenoxy resin (A) in 100 parts by weight of resin components; and a reinforced fiber base material.

A fourth aspect of the present invention is a method for producing a metal/fiber-reinforced resin material composite body including a metal member, a first fiber-reinforced resin material that is combined with the metal member, and a bonding resin layer which is laminated on at least one surface of the metal member and interposed between the metal member and the first fiber-reinforced resin material for bonding them together.

In addition, in the fourth aspect of the present invention, the production method includes a process in which a bonding resin composition containing a phenoxy resin (A) alone or 50 parts by weight or more of a phenoxy resin (A) in 100 parts by weight of resin components is applied to the metal member to form a coating film; and a process in which a first prepreg which is a precursor of the first fiber-reinforced resin material is disposed on the coating film, according to heating and pressing, the phenoxy resin (A) in the coating film is melted and then solidified or the bonding resin composition is melted and then cured, and thereby the bonding resin layer is formed, and the first fiber-reinforced resin material and the metal member are adhered and combined.

A fifth aspect of the present invention provides a method for producing a metal/fiber-reinforced resin material composite body which includes a metal member, a first fiber-reinforced resin material that is combined with the metal member, and a bonding resin layer which is laminated on at least one surface of the metal member and interposed between the metal member and the first fiber-reinforced resin material for bonding them together, and in which the bonding resin layer is a second fiber-reinforced resin material including a matrix resin and a reinforced fiber base material contained in the matrix resin.

In addition, in the fifth aspect of the present invention, the production method includes a process in which a fine powder of a phenoxy resin (A) alone or a bonding resin composition which contains 50 parts by weight or more of a phenoxy resin (A) in 100 parts by weight of resin components and is a solid at room temperature is attached to the reinforced fiber base material by powder coating to produce a second prepreg which is a precursor of the second fiber-reinforced resin material and has a resin composition proportion (RC) in a range of 20 to 50%; and a process in which the metal member, the second prepreg, and a first prepreg which is a precursor of the first fiber-reinforced resin material are laminated and disposed in this order, according to heating and pressing, the phenoxy resin (A) is melted and then solidified or the bonding resin composition is melted and then cured, and thereby the bonding resin layer is formed, and the first fiber-reinforced resin material and the metal member are adhered and combined.

[Advantageous Effects of Invention]

According to the present invention, there is provided a metal/fiber-reinforced resin material composite body in which a metal member and a fiber-reinforced resin material are firmly adhered with a bonding resin layer therebetween. The metal/fiber-reinforced resin material composite body is lightweight and has excellent processability and can be produced by a simple method. For example, even if the metal member is a steel material subjected to an antirust treatment, the metal member and the fiber-reinforced resin material have high bonding strength without performing a special surface roughening treatment. In addition, when the metal member and the fiber-reinforced resin material are combined, since batch processing is possible simultaneously with molding of the metal member by heating and pressing, production costs are excellent. Therefore, the metal/fiber-reinforced resin material composite body of the present invention as a lightweight and high-strength material can be suitably used for not only for cases for electrical and electronic components but also structural members in applications such as automobile members and aircraft members.

[Brief Description of Drawings]

FIG. 1 is a schematic view showing a cross-sectional structure of a metal/fiber-reinforced resin material composite body according to a first embodiment of the present invention.

FIG. 2 is a schematic view showing a cross-sectional structure according to another aspect of the metal/fiber-reinforced resin material composite body according to the first embodiment of the present invention.

FIG. 3 is a schematic view showing a cross-sectional structure of a metal/fiber-reinforced resin material composite body according to a second embodiment of the present invention.

FIG. 4 is a schematic view showing a cross-sectional structure according to another aspect of the metal/fiber-reinforced resin material composite body according to the second embodiment of the present invention.

FIG. 5 shows explanatory diagrams illustrating an example of a process of producing a metal/fiber-reinforced resin material composite body.

FIG. 6 shows explanatory diagrams illustrating another example of the process of producing a metal/fiber-reinforced resin material composite body.

FIG. 7 shows explanatory diagrams illustrating still another example of the process of producing a metal/fiber-reinforced resin material composite body.

FIG. 8 shows diagrams schematically showing an example of a process of producing a bonding sheet by powder coating.

FIG. 9 is a diagram schematically showing an aspect of thermocompression bonding of the bonding sheet obtained in FIG. 8 and a metal member.

FIG. 10 is an explanatory diagram illustrating a configuration of a sample of a metal-FRP composite body for a bending test in examples and comparative examples.

FIG. 11 is an explanatory diagram illustrating a configuration of a sample of a metal-FRP composite body for a shear test in examples and comparative examples.

[Description of Embodiments]

Embodiments of the present invention will be appropriately described below in detail with reference to the drawings.

[First embodiment]

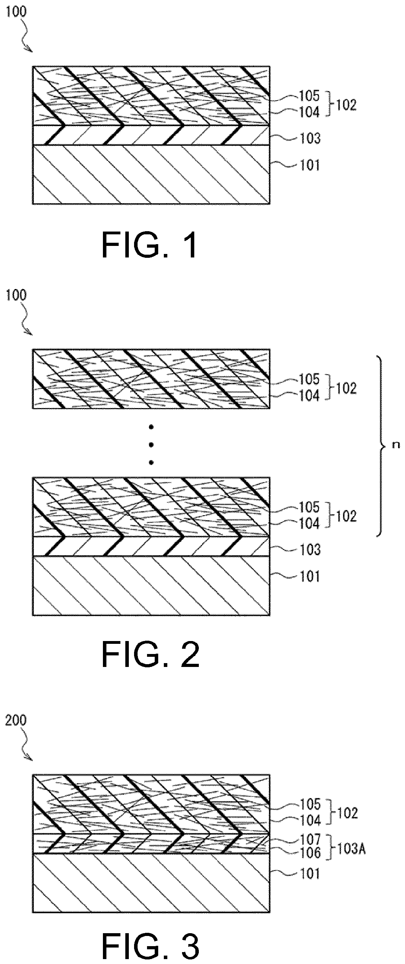

FIG. 1 and FIG. 2 are schematic views showing a cross-sectional structure of a metal-FRP composite body in a lamination direction as a metal/fiber-reinforced resin material composite body according to a first embodiment of the present invention. As shown in FIG. 1, a metal-FRP composite body 100 includes a metal member 101, an FRP layer 102 as a first fiber-reinforced resin material, and a bonding resin layer 103 interposed between the metal member 101 and the FRP layer 102. As will be described below, the bonding resin layer 103 is a solidified product of a phenoxy resin (A) alone or a cured product of a bonding resin composition containing 50 parts by weight or more of a phenoxy resin (A) in 100 parts by weight of resin components. Here, when simply referred to as a "cured product," in addition to a cured product in a first cured state which is solidified but it is not crosslinked after the phenoxy resin (A) and the like contained in the bonding resin composition are melted, it also includes a cross-linked cured product in a second cured state to be described below. In the metal-FRP composite body 100, the FRP layer 102 includes a matrix resin 104 and a reinforced-fiber material 105 which is contained in and combined with the matrix resin 104. The bonding resin layer 103 is provided in contact with at least one side surface of the metal member 101 and firmly bonds the metal member 101 to the FRP layer 102. Here, the bonding resin layer 103 and the FRP layer 102 may be formed on both surfaces of the metal member 101. In addition, the metal member 101 may be disposed on both sides of a laminate including the bonding resin layer 103 and the FRP layer 102 therebetween.

In the metal-FRP composite body 100, the FRP layer 102 is formed using at least one or more FRP molding prepregs. The FRP layer 102 is not limited to one layer, and may be formed into, for example, two or more layers as shown in FIG. 2. The thickness of the FRP layer 102, the number of FRP molding prepregs when the FRP layer 102 is formed into a plurality of layers, and the number of layers n of the FRP layer 102 can be appropriately set according to the purpose of use. Respective layers of the FRP prepreg forming the FRP layer 102 may have the same configuration or different configurations. That is, the resin type of the matrix resin 104 constituting the FRP layer 102, the type, content, and the like of the reinforced-fiber material 105 may be different for each layer.

In addition, the FRP layer 102 may be molded in advance when combined with the metal member 101 or may be in a state of the FRP molding prepreg and is preferably in a latter state in which a more uniform FRP layer 102 can be formed.

In addition, in the metal-FRP composite body 100, the resin constituting the bonding resin layer 103 and the matrix resin 104 of the first FRP layer 102 in contact with the bonding resin layer 103 may be the same resin or different from each other. In order to secure bonding between the bonding resin layer 103 and the first FRP layer 102, it is preferable to select the same resin or the same type of resin, or a resin type in which proportions of a polar group contained in a polymer and the like are similar. Here, "the same resin" refers to resins which are composed of the same components and have the same composition proportions, and "the same type of resin" refers to resins which may have different composition proportions as long as the main components are the same. The "same type of resin" includes "the same resin." In addition, the "main component" refers to a component of which a proportion is 50 parts by weight or more in 100 parts by weight of resin components. Here, the "resin components" include a thermoplastic resin, a thermosetting resin, and the like, but do not include a non-resin component such as a crosslinking agent.

[Second embodiment]

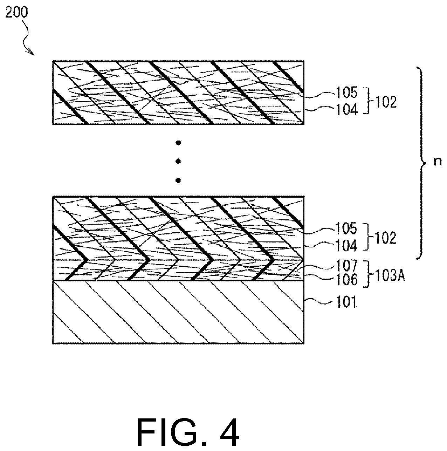

FIG. 3 and FIG. 4 are schematic views showing a cross-sectional structure of a metal-FRP composite body as a metal/fiber-reinforced resin material composite body according to a second embodiment of the present invention. As shown in FIG. 3, a metal-FRP composite body 200 includes the metal member 101, the FRP layer 102 as a first fiber-reinforced resin material, and a bonding resin layer 103A interposed between the metal member 101 and the FRP layer 102. The bonding resin layer 103A is a second fiber-reinforced resin material including a matrix resin 106 and a reinforced-fiber material 107 contained in and combined with the matrix resin 106. As will be described below, the matrix resin 106 is a solidified product of a phenoxy resin (A) alone or a cured product of a bonding resin composition containing 50 parts by weight or more of a phenoxy resin (A) in 100 parts by weight of resin components. Here, the configuration of the FRP layer 102 is the same as in the first embodiment. The bonding resin layer 103A is provided in contact with at least one side surface of the metal member 101, and firmly bonds the metal member 101 to the FRP layer 102. Here, the bonding resin layer 103A and the FRP layer 102 may be formed on both surfaces of the metal member 101. In addition, the metal member 101 may be disposed on both sides of a laminate including the bonding resin layer 103A and the FRP layer 102 with therebetween.

In the metal-FRP composite body 200, the FRP layer 102 is configured of at least one or more FRP molding prepregs, and the FRP layer 102 is not limited to one layer, and may be formed into, for example, two or more layers as shown in FIG. 4. The number of layers n of the FRP layer 102 when the FRP layer 102 is formed into a plurality of layers can be appropriately set according to the purpose of use. Respective layers of the FRP layer 102 may have the same configuration or different configurations. That is, the resin type of the matrix resin 104 constituting the FRP layer 102, and the type, content, and the like of the reinforced-fiber material 105 may be different for each layer.

In addition, in the metal-FRP composite body 200, the type of the resin constituting the matrix resin 106 of the bonding resin layer 103A may be the same as or different from the type of the resin of the matrix resin 104 of the first FRP layer 102 in contact with the bonding resin layer 103A. In order to secure bonding between the bonding resin layer 103A and the first FRP layer 102, it is preferable to select the same resin or the same type of resin or a combination of resin types in which proportions of polar groups contained in the polymer are similar as the resin type of the matrix resin 106 and the matrix resin 104. In particular, preferably, the resin of the matrix resin 106 of the bonding resin layer 103A and the resin of the matrix resin 104 of the FRP layer 102 are the same or of the same type.

In the metal-FRP composite bodies 100 and 200 of the first and second embodiments, in order to secure sufficient bonding between the metal member 101 and the FRP layer 102, the thickness of the bonding resin layers 103 and 103A is, for example, preferably in a range of 3 to 100 $\mu$m, and more preferably in a range of 5 to 75 $\mu$m. When the thickness of the bonding resin layers 103 and 103A is less than 3 $\mu$m, bonding between the metal member 101 and the FRP layer 102 is insufficient, and sufficient mechanical strength cannot be obtained in the metal-FRP composite bodies 100 and 200. On the other hand, when the thickness of the bonding resin layers 103 and 103A exceeds 100 $\mu$m, the bonding resin layer is in excess and thus a sufficient reinforcing effect of reinforced fibers in the metal-FRP composite bodies 100 and 200 cannot be obtained.

Respective components of the metal-FRP composite bodies 100 and 200 will be described below.

<Metal member>

The material, shape, thickness, and the like of the metal member 101 are not particularly limited as long as it can be molded and processed by pressing and the like, and the shape is preferably a thin plate shape. Preferable examples of the material of the metal member 101 include iron, titanium, aluminum, magnesium and alloys thereof. Here, the alloy refers to, for example, an iron alloy (including stainless steel), a Ti alloy, an Al alloy, or a Mg alloy, or the like. More preferable examples of the material of the metal member 101 include a steel material, an iron alloy, and aluminum, and most preferable examples thereof include steel materials. Examples of such a steel material include carbon steel, alloy steel, high tensile steel, and the like used for general structures and mechanical structures which are steel materials defined in the Japanese Industrial Standards (JIS) and the like. Specific examples of such a steel material include cold rolled steel, hot rolled steel, a hot rolled steel plate material for an automobile structure, and a hot rolled high tensile steel plate material for automobile processing.

Any surface treatment may be performed on the surface of the steel material. Here, examples of the surface treatment include various plating treatments such as zinc plating and aluminum plating, chemical conversion treatments such as a chromate treatment and a non-chromate treatment, and a chemical surface roughening treatment using physical or chemical etching such as sand blasting, but the present invention is not particularly limited thereto. In addition, a plurality of types of surface treatments may be performed. Regarding the surface treatment, at least an antirust treatment is preferably performed.

In order to improve bonding with the FRP layer 102, it is preferable to treat the surface of the metal member 101 with a primer. Preferable examples of the primer include a silane coupling agent and a triazine thiol derivative. Examples of the silane coupling agent include an epoxy-based silane coupling agent, an amino-based silane coupling agent, and an imidazole silane compound. Examples of the triazine thiol derivative include 6-diallylamino-2,4-dithiol-1,3,5-triazine, 6-methoxy-2,4-dithiol-1,3,5-triazine monosodium, 6-propyl-2,4-dithiolamino-1,3,5-triazine monosodium, and 2,4,6-trithiol-1,3,5-triazine.

<Reinforced fiber material>

The reinforced-fiber materials 105 and 107 used for the metal-FRP composite bodies 100 and 200 are not particularly limited, and for example, carbon fibers, boron fibers, silicon carbide fibers, glass fibers, or aramid fibers are preferable, and carbon fibers are more preferable. Regarding the type of carbon fibers, for example, any of a PAN type and a pitch type can be used, and these can be used alone or in combination according to the purpose or application.

<Bonding resin layer and bonding resin composition>

A bonding resin (the matrix resin 106 for the bonding resin layer 103A) constituting the bonding resin layers 103 and 103A which adhere the metal member 101 and the FRP layer 102 of the metal-FRP composite bodies 100 and 200 is a solidified product of a phenoxy resin (A) alone or a cured product of a bonding resin composition containing 50 parts by weight or more of a phenoxy resin (A) in 100 parts by weight of resin components. In this manner, the metal member 101 and the FRP layer 102 can be firmly adhered using the phenoxy resin (A) or the bonding resin composition. The bonding resin composition preferably contains 55 parts by weight or more of the phenoxy resin (A) in 100 parts by weight of resin components. Examples of the form of the phenoxy resin (A) or the bonding resin composition include a powder, a liquid such as a varnish and a solid such as a film.

The "phenoxy resin" is a linear polymer obtained according to a condensation reaction of a dihydric phenolic compound and epihalohydrin or a poly addition reaction of a dihydric phenolic compound and a bifunctional epoxy resin and is an amorphous thermoplastic resin. The phenoxy resin (A) can be obtained by a conventionally known method in a solution or with no solvent, and can be used in any form of a varnish, a film, and a powder. Regarding the average molecular weight of the phenoxy resin (A), the mass average molecular weight (Mw) is, for example, in a range of 10,000 to 200,000, preferably in a range of 20,000 to 100,000, and more preferably in a range of 30,000 to 80,000. When a Mw of the phenoxy resin (A) is too low, the strength of a molded article decreases, and when a Mw is too high, the workability and processability easily deteriorate. Here, the Mw is a value that is measured through gel permeation chromatography (GPC) and converted using a standard polystyrene calibration curve.

The hydroxyl equivalent (g/eq) of the phenoxy resin (A) used in the present invention is, for example, in a range of 50 to 1,000, preferably in a range of 50 to 750, and particularly preferably in a range of 50 to 500. When the hydroxyl equivalent of the phenoxy resin (A) is too low, since the number of hydroxyl groups increases, and thus the water absorption rate increases, there is a concern of mechanical properties of the cured product deteriorating. On the other hand, when the hydroxyl equivalent of the phenoxy resin (A) is too high, since the number of hydroxyl groups decreases and the affinity with an adherend decreases, there is a risk of mechanical properties of the metal-FRP composite bodies 100 and 200 deteriorating.

In addition, the glass transition temperature (Tg) of the phenoxy resin (A) is, for example, suitable in a range of 65 °C to 150 °C, and preferably in a range of 70 °C to 150 °C. When Tg is lower than 65 °C, the moldability is improved, but since the fluidity of the resin is too high, it is difficult to secure the thickness of the bonding resin layers 103 and 103A. When Tg is higher than 150 °C, since the melt viscosity tends to increase, it is difficult to impregnate it into a reinforced fiber base material without defects such as voids, and an adhering process at a higher temperature is required. Here, Tg of the phenoxy resin (A) is a numerical value that is measured using a differential scanning calorimeter under heating conditions of 10 °C/min and in a temperature range of 20 to 280 °C and calculated from a peak value of a second scan.

The phenoxy resin (A) is not particularly limited as long as the above physical properties are provided, and preferable examples thereof include bisphenol A type phenoxy resins (for example, Pheno Tohto YP-50, Pheno Tohto YP-50S, and Pheno Tohto YP-55U commercially available from Nippon Steel & Sumikin Chemical Co., Ltd.), bisphenol F type phenoxy resins (for example, Pheno Tohto FX-316 commercially available from Nippon Steel & Sumikin Chemical Co., Ltd.), copolymer type phenoxy resins of bisphenol A and bisphenol F (for example, YP-70 commercially available from Nippon Steel & Sumikin Chemical Co., Ltd.), and special phenoxy resins such as brominated phenoxy resins, phosphorus-containing phenoxy resins, and sulfone group-containing phenoxy resins other than the above examples (for example, Pheno Tohto YPB-43C, Pheno Tohto FX293, YPS-007 and the like commercially available from Nippon Steel & Sumikin Chemical Co., Ltd.). These can be used alone or two or more thereof can be used in combination.

The bonding resin composition can contain a thermoplastic resin and a thermosetting resin other than the phenoxy resin (A). The type of the thermoplastic resin is not particularly limited, and, for example, at least one selected from thermoplastic aromatic polyesters such as a polyolefin and its acid-modified products, polystyrene, polymethyl methacrylate, an AS resin, an ABS resin, polyethylene terephthalate, and polybutylene terephthalate, and a polycarbonate, polyimide, polyamide, polyamideimide, polyether imide, polyether sulfone, polyphenylene ether and its modified products, polyphenylene sulfide, polyoxymethylene, polyarylate, polyether ketone, polyether ether ketone, polyether ketone ketone, thermoplastic epoxy, and the like can be used. In addition, regarding the thermosetting resin, for example, at least one selected from among an epoxy resin, a vinyl ester resin, a phenol resin, a urethane resin, and the like can be used.

At any temperature in a range of 160 to 250 °C, the bonding resin (composition) preferably has a melt viscosity of 3,000 Pa·s or less, more preferably has a melt viscosity in a range of 90 to 2,900 Pa·s, and most preferably has a melt viscosity in a range of 100 to 2,800 Pa·s. When the melt viscosity in a temperature range of 160 to 250 °C exceeds 3,000 Pa·s, the fluidity during melting deteriorates, and defects such as voids are easily generated in the bonding resin layers 103 and 103A.

Crosslinkable bonding resin composition:

When a crosslinking agent, for example, an acid anhydride, an isocyanate, a caprolactam, or the like, is added to the bonding resin composition containing the phenoxy resin (A), a crosslinkable bonding resin composition using secondary hydroxyl groups contained in the phenoxy resin (A) can be obtained. When the crosslinking reaction is used, since the heat resistance, which was a drawback of the phenoxy resin, can be improved, application to members that are used in a higher temperature environment is possible. In crosslink formation using secondary hydroxyl groups in the phenoxy resin (A), a crosslinkable bonding resin composition in which an epoxy resin (B) and a crosslinking agent (C) are added is preferably used. When such a crosslinkable bonding resin composition is used, it is possible to obtain a cross-linked cured product in a second cured state in which Tg is improved compared with that with the phenoxy resin (A) alone. Tg of the cross-linked cured product of the crosslinkable bonding resin composition is, for example, 160 °C or higher, and preferably in a range of 170 to 220 °C.

In the crosslinkable bonding resin composition, regarding the epoxy resin (B) added to the phenoxy resin (A), a bifunctional or higher epoxy resin is preferable. Examples of the bifunctional or higher epoxy resin include bisphenol A type epoxy resins (for example, Epototo YD-011, Epototo YD-7011, and Epototo YD-900 commercially available from Nippon Steel & Sumikin Chemical Co., Ltd.), bisphenol F type epoxy resins (for example, Epototo YDF-2001 commercially available from Nippon Steel & Sumikin Chemical Co., Ltd.), diphenyl ether type epoxy resins (for example, YSLV-80DE commercially available from Nippon Steel & Sumikin Chemical Co., Ltd.), tetramethyl bisphenol F type epoxy resins (for example, YSLV-80XY commercially available from Nippon Steel & Sumikin Chemical Co., Ltd.), bisphenol sulfide type epoxy resins (for example, YSLV-120TE commercially available from Nippon Steel & Sumikin Chemical Co., Ltd.), hydroquinone type epoxy resins (for example, Epototo YDC-1312 commercially available from Nippon Steel & Sumikin Chemical Co., Ltd.), phenolic novolac type epoxy resins (for example, Epototo YDPN-638 commercially available from Nippon Steel & Sumikin Chemical Co., Ltd.), ortho-cresol novolac type epoxy resins (for example, Epototo YDCN-701, Epototo YDCN-702, Epototo YDCN-703, and Epototo YDCN-704 commercially available from Nippon Steel & Sumikin Chemical Co., Ltd.), aralkyl naphthalene diol novolac type epoxy resins (for example, ESN-355 commercially available from Nippon Steel & Sumikin Chemical Co., Ltd.), and triphenylmethane type epoxy resins (for example, EPPN-502H commercially available from Nippon Kayaku Co., Ltd.), but the present invention is not limited thereto. In addition, two or more types of these epoxy resins may be used in combination.

In addition, the epoxy resin (B) is not particularly limited, but a crystalline epoxy resin is preferable and a crystalline epoxy resin having a melting point in a range of 70 °C to 145 °C and a melt viscosity of 2.0 Pa·s or less at 150 °C is more preferable. When a crystalline epoxy resin exhibiting such melting properties is used, it is possible to reduce the melt viscosity of the crosslinkable bonding resin composition as the bonding resin composition and it is possible to improve the bondability. When the melt viscosity exceeds 2.0 Pa·s, the moldability of the crosslinkable bonding resin composition may be reduced and the homogeneity of the metal-FRP composite bodies 100 and 200 may deteriorate.

Preferable examples of the crystalline epoxy resin include Epototo YSLV-80XY, YSLV-70XY, YSLV-120TE, and YDC-1312 (commercially available from Nippon Steel & Sumikin Chemical Co., Ltd.),YX-4000, YX-4000H, YX-8800, YL-6121H, YL-6640, and the like (commercially available from Mitsubishi Chemical Corporation), HP-4032, HP-4032D, HP-4700, and the like (commercially available from DIC Corporation), and NC-3000 and the like (commercially available from Nippon Kayaku Co., Ltd.).

The crosslinking agent (C) forms an ester bond with secondary hydroxyl groups in the phenoxy resin (A) and thus causes the phenoxy resin (A) to be three-dimensionally crosslinked. Therefore, unlike strong crosslinking such as curing of the thermosetting resin, since crosslinking can be released due to a hydrolysis reaction, the metal member 101 and the FRP layer 102 can be easily peeled off from each other. Accordingly, it is possible to recycle the metal member 101 and the FRP layer 102.

Regarding the crosslinking agent (C), an acid anhydride is preferable. The acid anhydride is not particularly limited as long as it is a solid at room temperature and does not exhibit much sublimation. However, in consideration of imparting heat resistance to the metal-FRP composite bodies 100 and 200 and the reactivity, an aromatic acid dianhydride having two or more acid anhydride groups that react with hydroxyl groups in the phenoxy resin (A) is preferable. In particular, an aromatic compound having two acid anhydride groups such as pyromellitic anhydride is preferably used because it has a higher crosslinking density than a trimellitic anhydride with respect to hydroxyl groups, and the heat resistance is improved. Among aromatic acid dianhydrides, for example, an aromatic acid dianhydride having compatibility with respect to the phenoxy resin (A) and the epoxy resin (B) such as 4,4'-oxydiphthalic acid, ethylene glycol bisanhydro trimellitate, and 4,4'-(4,4'-isopropylidene diphenoxy)diphthalic anhydride is more preferable because it has a stronger effect of improving Tg. In particular, for example, an aromatic tetracarboxylic acid dianhydride having two acid anhydride groups such as pyromellitic anhydride is preferably used because it has an improved crosslinking density and improved heat resistance compared with those of phthalic anhydride having only one acid anhydride group. That is, the aromatic tetracarboxylic acid dianhydride has favorable reactivity because it has two acid anhydride groups, whereby a cross-linked cured product with a strength sufficient for demolding is obtained in a short molding time, and it is possible to increase the final crosslinking density in order for four carboxyl groups to be generated due to an esterification reaction with secondary hydroxyl groups in the phenoxy resin (A).

Regarding the reaction of the phenoxy resin (A), the epoxy resin (B) and the crosslinking agent (C), crosslinking and curing occur due to an esterification reaction between secondary hydroxyl groups in the phenoxy resin (A) and an acid anhydride group in the crosslinking agent (C), and moreover, a reaction between a carboxyl group generated due to the esterification reaction and an epoxy group in the epoxy resin (B). A phenoxy resin crosslinked component can be obtained due to the reaction between the phenoxy resin (A) and the crosslinking agent (C). However, since the melt viscosity of the bonding resin composition can be reduced due to coexistence of the epoxy resin (B), excellent characteristics such as improvement in impregnation with an adherend, promotion of a crosslinking reaction, improvement in the crosslinking density, and improvement in the mechanical strength are exhibited.

Here, it can be conceived that the crosslinkable bonding resin composition also include the epoxy resin (B), but the phenoxy resin (A) which is a thermoplastic resin is a main component, and an esterification reaction between its secondary hydroxyl groups and an acid anhydride group in the crosslinking agent (C) is preferential. That is, since some time is taken for a reaction between an acid anhydride used as the crosslinking agent (C) and the epoxy resin (B), a reaction between the crosslinking agent (C) and secondary hydroxyl groups in the phenoxy resin (A) occurs first. Then, since a reaction between the crosslinking agent (C) remaining in the previous reaction, or remaining carboxyl groups derived from the crosslinking agent (C) and the epoxy resin (B) occurs, it is possible to further improve the crosslinking density. Therefore, unlike a resin composition containing an epoxy resin which is a thermosetting resin as a main component, a cross-linked cured product obtained using the crosslinkable bonding resin composition retains its property of being a thermoplastic resin due to its crosslinked curing mechanism, and also has a better storage stability than an epoxy resin composition in which an acid anhydride is used as a curing agent.

In the crosslinkable bonding resin composition using crosslinking of the phenoxy resin (A), with respect to 100 parts by weight of the phenoxy resin (A), the epoxy resin (B) is preferably added in a range of 5 to 85 parts by weight. An amount of the epoxy resin (B) added with respect to 100 parts by weight of the phenoxy resin (A) is more preferably in a range of 9 to 83 parts by weight and most preferably in a range of 10 to 80 parts by weight. When an amount of the epoxy resin (B) added exceeds 85 parts by weight, since some time is taken for curing the epoxy resin (B), it is difficult to obtain the strength necessary for demolding in a short time and also the recyclability of the FRP layer 102 is reduced. In addition, when an amount of the epoxy resin (B) added is less than 5 parts by weight, this is not preferable because an effect of improving the crosslinking density due to addition of the epoxy resin (B) cannot be obtained, the cross-linked cured product of the crosslinkable bonding resin composition is less likely to exhibit a Tg of 160 °C or higher, and the fluidity deteriorates.

An amount of the crosslinking agent (C) added is generally in a range of 0.6 to 1.3 mol of acid anhydride groups with respect to 1 mol of secondary hydroxyl groups of the phenoxy resin (A), and is preferably in a range of 0.7 to 1.3 mol, and more preferably in a range of 1.1 to 1.3 mol thereof. When an amount of acid anhydride groups is too small, since the crosslinking density is low, the mechanical properties and heat resistance deteriorate, and when an amount thereof is too large, unreacted acid anhydride and carboxyl groups adversely affect curing characteristics and the crosslinking density. Therefore, it is preferable to adjust an amount of the epoxy resin (B) added according to an amount of the crosslinking agent (C) added. Specifically, in order to react carboxyl groups generated due to a reaction between secondary hydroxyl groups in the phenoxy resin (A) and an acid anhydride group in the crosslinking agent (C) according to the epoxy resin (B), an amount of the epoxy resin (B) added may be set to be in a range of 0.5 to 1.2 mol in terms of an equivalent proportion with respect to the crosslinking agent (C). Preferably, an equivalent proportion of the crosslinking agent (C) with respect to the epoxy resin (B) is in a range of 0.7 to 1.0 mol.

Here, when an amount of the crosslinking agent (C) added is converted to parts by weight, although it depends on the type of crosslinking agent which is used, it is 20 to 100 parts by weight, preferably 30 to 100 parts by weight, and most preferably 40 to 100 parts by weight with respect to 100 parts by weight of the phenoxy resin.

When the crosslinking agent (C) is added together with the phenoxy resin (A) and the epoxy resin (B), it is possible to obtain a crosslinkable bonding resin composition, and a promoter (D) as a catalyst may be additionally added so that the crosslinking reaction reliably occurs. The promoter (D) is not particularly limited as long as it is a solid at room temperature and exhibits little sublimation, and examples thereof include tertiary amines such as triethylenediamine, imidazoles such as 2-methylimidazole, 2-phenylimidazole, and 2-phenyl-4-methylimidazole, organic phosphines such as triphenylphosphine, and tetraphenyl boron salts such as tetraphenylphosphonium tetraphenyl borate. Such promoters (D) may be used alone or two or more types thereof may be used in combination. Here, when the crosslinkable bonding resin composition is formed into a fine powder and attached to a reinforced fiber base material according to a powder coating method using an electrostatic field to form the matrix resin 106, an imidazole-based latent catalyst which has a catalyst activation temperature of 130 °C or higher and which is a solid at room temperature is preferably used as the promoter (D). When the promoter (D) is used, an amount of the promoter (D) added is preferably in a range of 0.1 to 5 parts by weight with respect to a total amount of 100 parts by weight of the phenoxy resin (A), the epoxy resin (B), and the crosslinking agent (C).

The crosslinkable bonding resin composition is a solid at room temperature. Regarding its melt viscosity, the lowest melt viscosity, which is a lower limit value of a melt viscosity in a temperature range of 160 to 250 °C, is preferably 3,000 Pa·s or less, more preferably 2,900 Pa·s or less, and most preferably 2,800 Pa·s or less. When the lowest melt viscosity in a temperature range of 160 to 250 °C exceeds 3,000 Pa·s, since impregnation of the crosslinkable bonding resin composition into an adherend during thermocompression according to heat pressing or the like may be insufficient, and defects such as voids can occur in the bonding resin layers 103 and 103A and the like, the mechanical properties of the metal-FRP composite bodies 100 and 200 deteriorate.

Other additives, for example, natural rubber, synthetic rubber, an elastomer, various inorganic fillers, solvents, extender pigments, colorants, antioxidants, UV inhibitors, flame retardants, and flame retardant aids, can be added to the above bonding resin composition (including a crosslinkable bonding resin composition) as long as its bondability and physical properties are not impaired.

<FRP layer>

In the FRP used for the FRP layer 102 of the metal-FRP composite bodies 100 and 200, as a reinforced fiber base material which becomes the reinforced-fiber material 105, for example, a non-woven fabric base material using chopped fibers, a cloth material using continuous fibers, a unidirectional reinforced fiber base material (UD material), and the like can be used, and in consideration of a reinforcing effect, it is preferable to use a cloth material or a UD material.

In addition, regarding the matrix resin 104 of the FRP used for the FRP layer 102, for example, any of thermosetting resins such as an epoxy resin and a vinyl ester resin, thermoplastic aromatic polyesters such as a phenoxy resin, a polyolefin, and acid-modified products thereof, polyethylene terephthalate and polybutylene terephthalate, and thermoplastic resins such as a polycarbonate, polyimide, polyamide, polyamideimide, polyether imide, polyether sulfone, polyphenylene ether and modified products thereof, polyarylate, polyether ketone, polyether ether ketone, and polyether ketone ketone can be used, and it is preferable to form the matrix resin 104 using a resin composition exhibiting favorable bondability with the phenoxy resin (A). Here, examples of a resin exhibiting favorable bondability with the phenoxy resin (A) include an epoxy resin, a phenoxy resin, a polyolefin resin that is acid-modified with maleic anhydride or the like, and a polycarbonate, polyarylate, polyimide, polyamide, and polyether sulfone. In these resins, those having low bondability with respect to the metal member 101 are included, but they can be indirectly adhered to the metal member 101 with the bonding resin layers 103 and 103A therebetween.

In addition, in order to secure sufficient bondability between the FRP layer 102 and the bonding resin layers 103 and 103A, it is more preferable to form the matrix resin 104 using the same resin or the same type of resin as the resin constituting the bonding resin layers 103 and 103A (the matrix resin 106 for the bonding resin layer 103A).

In the metal-FRP composite bodies 100 and 200 having the above configuration, the shear strength between the metal member 101 and the fiber-reinforced resin material including the FRP layer 102 and the bonding resin layers 103 and 103A is preferably 40 N/5 mm or more and more preferably 45 N/5 mm or more. Most preferably, the shear strength is 50 to 1,500 N/5 mm. When the shear strength is less than 40 N/5 mm, the mechanical strength of the metal-FRP composite bodies 100 and 200 may be insufficient and excellent durability may not be obtained.

In addition, for the metal-FRP composite bodies 100 and 200 of the first and second embodiments, in the bending test shown in the following examples, peeling off of the metal member 101 from the metal-FRP composite bodies 100 and 200 is preferably cohesive peeling off and it is more preferable that peeling off not occur. In the bending test, when the peeling surface of the peeled metal member 101 is observed, it is possible to distinguish cohesive peeling and interfacial peeling. Generally, when a metal and FRP are combined, it is preferable that a bonding part be cohesively peeled off rather than interfacially peeled off. The reason for this is that, in the case of interfacial peeling off, there is vulnerability to a thermal cycle, an adhesive force is uneven, it is difficult to manage the quality, and defective products are easily generated.

[Method for producing a metal-FRP composite body]

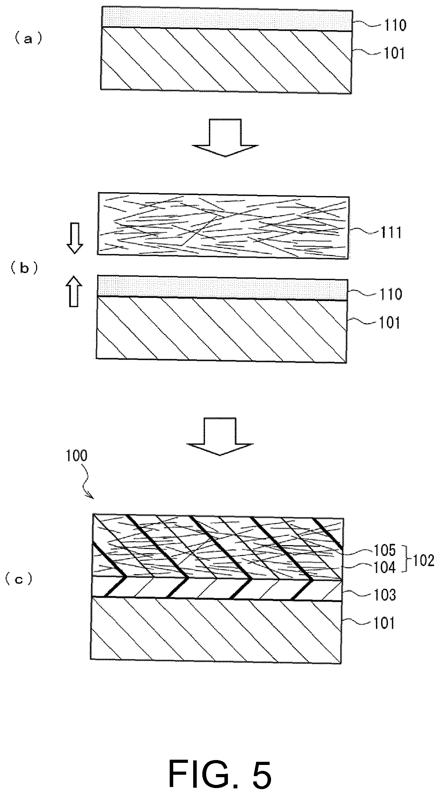

Next, a method for producing the metal-FRP composite bodies 100 and 200 will be described with reference to FIG. 5 to FIG. 7.

<Method for producing a metal-FRP composite body according to a first embodiment>

The metal-FRP composite body 100 is obtained by bonding a FRP (or an FRP molding prepreg as its precursor) processed into a desired shape which becomes the FRP layer 102 and the metal member 101 with the phenoxy resin (A) or a bonding resin composition which becomes the bonding resin layer 103 and solidifying the phenoxy resin (A) or curing the bonding resin composition. When combination is performed by bonding and adhering the metal member 101 and the FRP with the phenoxy resin (A) or the bonding resin composition, for example, the following method A and method B can be used, and the method A is preferable.

Method A:

A method in which a coating film (which becomes the bonding resin layer 103) formed of the phenoxy resin (A) or the bonding resin composition is formed on the surface of the metal member 101 and an FRP or an FRP molding prepreg (first prepreg) which becomes the FRP layer 102 is then laminated and subjected to thermocompression
In the method A, for example, as shown in FIG. 5(a), a powdered or liquid phenoxy resin (A) or a bonding resin composition is applied to at least one side surface of the metal member 101 to form a coating film 110. Here, in the method A, the coating film 110 may be formed on the side of an FRP or an FRP molding prepreg 111 (first prepreg) which becomes the FRP layer 102 rather than on the side of the metal member 101. However, here, a case in which the coating film 110 is formed on the side of the metal member 101 will be described.
Next, as shown in FIG. 5(b), the FRP molding prepreg 111 which becomes the FRP layer 102 is disposed in an overlapping manner on the side on which the coating film 110 is formed, and the metal member 101, the coating film 110, and the FRP molding prepreg 111 are laminated in this order to form a laminate. Here, in FIG. 5(b), the FRP can be laminated in place of the FRP molding prepreg 111. However, in this case, a bonding surface of the FRP is preferably roughened by, for example, blast processing, or activated by a plasma treatment, a corona treatment or the like. Next, when this laminate is heated or pressurized, as shown in FIG. 5(c), the metal-FRP composite body 100 can be obtained.
In the method A, regarding a method for forming the coating film 110 which becomes the bonding resin layer 103, a method for applying powder of the phenoxy resin (A) or the bonding resin composition to the surface of the metal member 101 is preferable. In the bonding resin layer 103 formed by powder coating, the phenoxy resin (A) or the bonding resin composition has a form of fine particles and is easily melted, and voids escape easily because appropriate voids are maintained in the coating film 110. Then, when the FRP or the FRP molding prepreg 111 is subjected to thermocompression, since the phenoxy resin (A) or the bonding resin composition favorably wets the surface of the metal member 101, a degassing process such as varnish coating is not necessary, and defects due to insufficient wettability such as generation of voids as seen in the film are unlikely to occur.
In the method A, in FIG. 5(a), the coating film 110 is formed on both surfaces of the metal member 101, and in FIG. 5(b), the FRP molding prepreg 111 (or the FRP) may be laminated on each of both sides of the coating film 110. In addition, the FRP molding prepreg 111 (or the FRP) which becomes the FRP layer 102 is not limited to one layer, and may be formed into a plurality of layers (refer to FIG. 2). In addition, the FRP molding prepreg 111 (or the FRP) which becomes the FRP layer 102 is interposed in a sandwich form using two or more metal members 101 for lamination.

Method B:

A method in which the filmed phenoxy resin (A) or bonding resin composition and the FRP or FRP molding prepreg (first prepreg) which becomes the FRP layer 102 are laminated on the metal member 101 and subjected to thermocompression

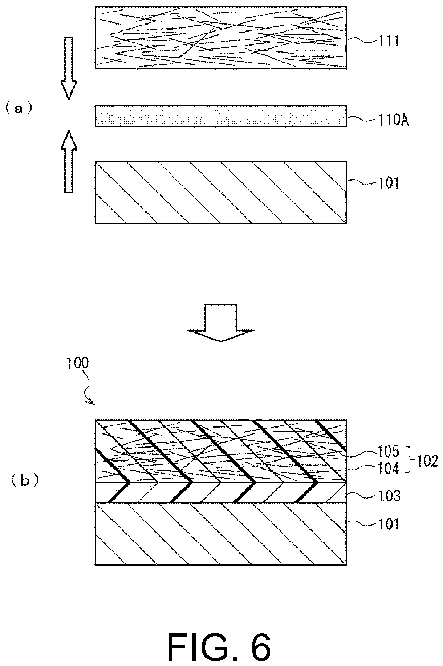

In the method B, for example, as shown in FIG. 6(a), a bonding sheet 110A in which the phenoxy resin (A) or the bonding resin composition is formed into a film and the FRP molding prepreg 111 which becomes the FRP layer 102 are disposed in an overlapping manner on at least one side surface of the metal member 101, and the metal member 101, the bonding sheet 110A, and the FRP molding prepreg 111 are laminated in this order to form a laminate. Here, in FIG. 6(a), the FRP can be laminated in place of the FRP molding prepreg 111. However, in this case, a bonding surface of the FRP is preferably roughened by, for example, blast processing, or activated by a plasma treatment, a corona treatment or the like. Next, when this laminate is heated and pressurized, as shown in FIG. 6(b), the metal-FRP composite body 100 can be obtained.

In the method B, in FIG. 6(a), the bonding sheet 110A and the FRP molding prepreg 111 (or the FRP) may be laminated on both surfaces of the metal member 101. In addition, the FRP molding prepreg 111 which becomes the FRP layer 102 (or the FRP) is not limited to one layer, and may be formed into a plurality of layers (refer to FIG. 2). In addition, the bonding sheet 110A and the FRP molding prepreg 111 which becomes the FRP layer 102 (or the FRP) are interposed in a sandwich form using two or more metal members 101 for lamination.

<Method for producing a metal-FRP composite body according to a second embodiment>

The metal-FRP composite body 200 is obtained by bonding an FRP (or the FRP molding prepreg 111) which becomes the FRP layer 102 and the metal member 101 which are processed into a desired shape with a bonding sheet (which becomes the bonding resin layer 103A) containing the phenoxy resin (A) or the bonding resin composition and the reinforced-fiber material 107 and solidifying the phenoxy resin (A) or curing the bonding resin composition. When combination is performed by bonding and adhering the metal member 101 and the FRP with the bonding sheet containing the phenoxy resin (A) or the bonding resin composition and the reinforced-fiber material 107, for example, the following method C can be used.

Method C:

A method in which a bonding sheet (second prepreg) containing the phenoxy resin (A) or the bonding resin composition and the reinforced-fiber material 107 and the FRP or the FRP molding prepreg 111 (first prepreg) which becomes the FRP layer 102 are laminated on the metal member 101 and subjected to thermocompression

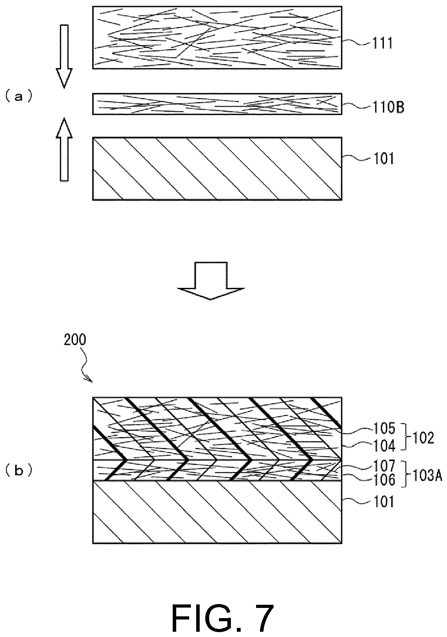

In the method C, for example, as shown in FIG. 7(a), a bonding sheet 110B containing the phenoxy resin (A) or the bonding resin composition and the reinforced-fiber material 107 and the FRP molding prepreg 111 which becomes the FRP layer 102 are disposed in an overlapping manner on at least one side surface of the metal member 101, and the metal member 101, the bonding sheet 110B, and the FRP molding prepreg 111 are laminated in this order to form a laminate. Here, the bonding sheet 110B is a sheet-like prepreg for bonding the metal member 101 and the FRP layer 102. Here, in FIG. 7(a), the FRP can be laminated in place of the FRP molding prepreg 111. However, in this case, a bonding surface of the FRP is preferably roughened by, for example, blast processing, or activated by a plasma treatment, a corona treatment or the like. Next, when this laminate is heated and pressurized, as shown in FIG. 7(b), the metal-FRP composite body 200 can be obtained.

In the method C, the FRP molding prepreg 111 (or the FRP) is adhered to the metal member 101 using the bonding sheet 110B containing the reinforced-fiber material 107. In this case, a resin component (a component as the matrix resin 106) derived from the phenoxy resin (A) or the bonding resin composition impregnated with the reinforced-fiber material 107 functions as a bonding resin.

In the method C, in FIG. 7(a), the bonding sheet 110B and the FRP molding prepreg 111 (or FRP) may be laminated on both surfaces of the metal member 101. In addition, the FRP molding prepreg 111 which becomes the FRP layer 102 (or the FRP) is not limited to one layer, and may be formed into a plurality of layers (refer to FIG. 4). In addition, the bonding sheet 110B and the FRP molding prepreg 111 which becomes the FRP layer 102 (or the FRP) are interposed in a sandwich form using two or more metal members 101 for lamination.

Combination with a metal member:

Combination of the metal member 101 and the FRP is preferably performed, for example, as follows.

i) In the method A, at a predetermined position on the bonding surface of the metal member 101, the phenoxy resin (A) or the bonding resin composition is applied as a powder or varnish, and the coating film 110 which becomes the bonding resin layer 103 is formed. Next, the FRP molding prepreg 111 which becomes the FRP layer 102 is laminated thereon and set in a press molding device, and pressurized and molded to form the bonding resin layer 103.

ii) In the method B or the method C, the bonding sheet 110A which becomes the bonding resin layer 103 or the bonding sheet 110B which becomes the bonding resin layer 103A is disposed at a predetermined position on the bonding surface of the metal member 101. Next, the FRP molding prepreg 111 which becomes the FRP layer 102 is laminated thereon and set in a press molding device, and pressurized and molded to form the bonding resin layers 103 and 103A.

<Thermocompression conditions>

In the above methods A to C, thermocompression conditions in which the metal member 101, the bonding sheet 110A or 110B, and the FRP molding prepreg 111 which becomes the FRP layer 102 (or the FRP) are combined are as follows.

A thermocompression temperature is not particularly limited, but it is, for example, in a range of 100 °C to 400 °C, and preferably in a range of 150 to 300 °C, more preferably in a range of 160 °C to 270 °C and most preferably in a range of 180 °C to 250 °C. In such a temperature range, a temperature equal to or higher than a melting point is more preferable for a crystalline resin and a temperature equal to or higher than Tg+150 °C is more preferable for a non-crystalline resin. When the temperature exceeds an upper limit temperature, since excess heat is applied, decomposition of the resin can be caused, and when the temperature is lower than a lower limit temperature, since the melt viscosity of the resin increases, impregnation into the reinforced fiber base material deteriorates.

The pressure during compression is, for example, preferably 3 MPa or higher and more preferably in a range of 3 to 5 MPa. When the pressure exceeds an upper limit, since an excess pressure is applied, deformation or damage can be caused, and when the pressure is lower than a lower limit, impregnation into the reinforced fiber base material deteriorates.

When the heat and press treatment time is at least 3 minutes or longer, sufficient thermocompression can be performed, and a range of 5 to 20 minutes is preferable.

Here, in the thermocompression process, combinatory batch molding of the metal member 101, the bonding sheet 110A or 110B, and the FRP molding prepreg 111 which becomes the FRP layer 102 (or the FRP) may be performed using a press molding device. Combinatory batch molding is preferably performed by hot pressing, but it is possible to perform processing by quickly setting a material preheated to a predetermined temperature in advance in a press molding device at a low temperature.

<Additional heating process>

In the methods A to C, when the crosslinkable bonding resin composition in which the epoxy resin (B) and the crosslinking agent (C) are added to the phenoxy resin (A) as a bonding resin composition for forming the bonding resin layers 103 and 103A or a raw material resin for forming the matrix resin 104 is used, an additional heating process can be further included.

When the crosslinkable bonding resin composition is used, in the thermocompression process, a cured product in a first cured state which is solidified but it is not crosslinked after the phenoxy resin and the like contained in the crosslinkable bonding resin composition are melted can be used to form the bonding resin layers 103 and 103A. In addition, when the same as or the same type of crosslinkable bonding resin composition is used for a matrix resin of the FRP molding prepreg 111 which becomes the FRP layer 102, the FRP layer 102 containing the matrix resin 104 formed of a cured product in a first cured state can be formed.

In this manner, through the thermocompression process, it is possible to produce an intermediate (preform) of the metal-FRP composite bodies 100 and 200 in which the metal member 101, the bonding resin layers 103 and 103A formed of a cured product in a first cured state, and the FRP layer 102 are laminated and integrated, and, for example, it can be applied to prevent positional deviation between them when the metal member 101 and the FRP layer 102 are collectively molded and combined. In this intermediate, as necessary, regarding the FRP layer 102, the matrix resin 104 that is a cured product in a first cured state may be used. Then, when the intermediate is subjected to the thermocompression process and then additionally subjected to a process with additional heat, at least the resin of the bonding resin layers 103 and 103A formed of a cured product in a first cured state can be crosslinked and cured so that it can be changed to a cross-linked cured product in a second cured state. In addition, preferably, when the FRP layer 102 is also subjected to a process with additional heat, the matrix resin 104 formed of a cured product in a first cured state can be crosslinked and cured so that it can be changed to a cross-linked cured product in a second cured state.

The temperature in the thermocompression process for obtaining a cured product in a first cured state is lower than 160 °C, and preferably 120 to 150 °C, and the pressure is 1 MPa or higher, and preferably 1 to 5 MPa. In addition, the additional heating process for changing a cured product in a first cured state to a cured product in a second cured state is preferably performed, for example, in a temperature range of 160 to 250 °C and for a time of about 10 to 30 minutes. Here, in this case, in order to reliably impregnate the resin into the reinforced fiber base material and improve adhesion to the metal member 101, a pressure of 3 MPa or higher can be applied.

In addition, in combination with the metal member 101, when the FRP layer 102, the bonding resin layer 103, or the bonding resin layer 103A is formed using the crosslinkable bonding resin composition, post curing is preferably performed on the metal-FRP composite bodies 100 and 200 after thermocompression, for example, in a temperature range of 200 to 250 °C for about 30 to 60 minutes. It is also possible to use thermal history in the post process such as coating for post curing.

As described above, when the crosslinkable bonding resin composition is used, Tg after crosslinking and curing is greatly improved compared to the phenoxy resin (A) alone. Therefore, before and after the additional heating process is performed on the intermediate (that is, a process in which the resin changes from a cured product in a first cured state to a cross-linked cured product in a second cured state), Tg changes. Specifically, Tg of the resin before crosslinking in the intermediate is, for example, 150 °C or lower, and on the other hand, since Tg of the resin crosslinked after the additional heating process is improved in the range of, for example, 160 °C or higher, and preferably 170 to 220 °C, it is possible to significantly improve the heat resistance.

<Post process>

In the post process for the metal-FRP composite bodies 100 and 200, in addition to coating, a drilling process for mechanical adhering to other members using bolts or rivets, application of a bonding agent for bonding and adhering, and the like are performed and assembling is performed.

Method for producing a bonding sheet:

Here, a method for producing the bonding sheet 110B (second prepreg) when the bonding resin layer 103A is formed will be described. Here, even when the FRP layer 102 is formed using the same type of resin as the matrix resin 106 of the bonding resin layer 103A, a method to be described below can be used for production.

In the bonding sheet 110B that forms the bonding resin layer 103A, regarding the reinforced fiber base material which becomes the reinforced-fiber material 107, as in the FRP layer 102, for example, a non-woven fabric base material using chopped fibers, a cloth material using continuous fibers, a unidirectional reinforced fiber base material (UD material), or the like can be used, and in consideration of a reinforcing effect, a cloth material or a UD material is preferably used.

Regarding the bonding sheet 110B, a prepreg produced using a powder coating method is more preferably used than a prepreg produced by a conventionally known method such as wet melting and a film stack method. The prepreg produced by a powder coating method has favorable drapability because the resin in a fine particle state is impregnated into the reinforced fiber base material, and is suitable for batch molding, heating and pressing because it can conform to an adherend even if it has a complex shape.

Regarding the powder coating method, for example, an electrostatic painting method, a fluidized bed method, or a suspension method is a main method. However, it is preferable to appropriately select any of these methods according to the reinforced fiber base material or the type of the matrix resin. Among these, the electrostatic painting method and the fluidized bed method are methods suitable for a thermoplastic resin, and are preferable because the process is simple and the productivity is favorable, and particularly, the electrostatic painting method is the most suitable method because the uniformity of attachment of the phenoxy resin (A) or bonding resin composition to the reinforced fiber base material is favorable.

When the bonding sheet 110B is formed, if powder coating of the phenoxy resin (A) or the bonding resin composition (which becomes the matrix resin 106) containing the phenoxy resin (A) is performed, it is preferable to obtain a prepreg by forming the phenoxy resin (A) or the bonding resin composition into a predetermined fine powder and attaching the fine powder to a reinforced fiber base material by powder coating.

In order to make the phenoxy resin (A) or the bonding resin composition into a fine powder, a grinding and mixing machine such as a dry grinding machine at a low temperature (century dry mill) is suitably used, and the present invention is not limited thereto. In addition, when the phenoxy resin (A) or the bonding resin composition for the matrix resin 106 is pulverized, respective components may be pulverized and then mixed, or respective components may be mixed in advance and then pulverized. In this case, pulverizing conditions may be set so that each fine powder has an average particle size to be described below. The fine powder obtained in this manner has an average particle size that is in a range of 10 to 100 $\mu$m, preferably in a range of 40 to 80 $\mu$m, and more preferably in a range of 40 to 50 $\mu$m. When the average particle size exceeds 100 $\mu$m, in powder coating in an electrostatic field, the energy when the phenoxy resin (A) or the bonding resin composition collides with a fiber increases, and an attachment rate for the reinforced fiber base material decreases. In addition, when the average particle size is less than 10 $\mu$m, particles are scattered due to an associated air flow and the attachment efficiency is lowered, and resin fine powder suspended in the air can cause deterioration in a working environment.

Regarding the bonding resin composition for forming the bonding sheet 110B, when powder coating of the crosslinkable bonding resin composition in which the epoxy resin (B) and the crosslinking agent (C) are added to the phenoxy resin (A) is performed, the average particle size of fine powder of the phenoxy resin (A) and fine powder of the epoxy resin (B) is preferably in a range of 1 to 1.5 times the average particle size of fine powder of the crosslinking agent (C). When the particle size of the fine powder of the crosslinking agent (C) is made finer than the particle size of fine powder of the phenoxy resin (A) and the epoxy resin (B), the crosslinking agent (C) enters and is attached to the inside of the reinforced fiber base material, and the crosslinking agent (C) is uniformly present around particles of the phenoxy resin (A) and particles of the epoxy resin (B), and thus the crosslinking reaction can reliably proceed.

In powder coating for forming the bonding sheet 110B, coating is performed so that an amount of the phenoxy resin (A) or the bonding resin composition (which becomes the matrix resin 106) attached to the reinforced fiber base material (resin proportion: RC) is, for example, preferably in a range of 20 to 50%, more preferably in a range of 25 to 45%, and most preferably in a range of 25 to 40%. When RC exceeds 50%, mechanical properties such as a tensile and flexural modulus of FRP deteriorate, and when RC is less than 20%, an amount of the resin attached is very small so that impregnation of the matrix resin 106 into the reinforced fiber base material is insufficient and there is a concern of thermophysical properties and mechanical properties deteriorating.

The fine powder of the powder-coated phenoxy resin (A) or bonding resin composition (which becomes the matrix resin 106) is fixed to the reinforced fiber base material by heat melting. In this case, powder coating may be performed on the reinforced fiber base material and then heated and fused, or powder coating may be performed on the reinforced fiber base material heated in advance and thus fusion may be performed simultaneously with application of fine powder of the phenoxy resin (A) or the bonding resin composition to the reinforced fiber base material. According to this heating, when fine powder of the phenoxy resin (A) or the bonding resin composition on the surface of the reinforced fiber base material is incompletely melted and a partially fused structure to be described below is formed, adhesion to the reinforced fiber base material is improved and fine powder of the coated phenoxy resin (A) or bonding resin composition is prevented from falling off. Here, "incomplete melting" does not mean melting so that all of a fine powder 108 of the raw material resin is made into droplets and flows, but refers to a state in which some of the fine powder 108 is completely made into droplets, but in most of the fine powder 108, only the surface is melted and made into a liquid and center parts remain in a solid state.

However, in this step, the phenoxy resin (A) or the bonding resin composition which becomes the matrix resin 106 is concentrated on the surface of the reinforced fiber base material, and does not enter the inside of the reinforced fiber base material like a molded article after heating, pressurizing, and molding. Here, a heating time required for forming a partially fused structure of the phenoxy resin (A) or the bonding resin composition after powder coating is not particularly limited, and generally 1 to 2 minutes is suitable. The melting temperature is in a range of 150 to 240 °C, preferably in a range of 160 to 220 °C, and more preferably in a range of 180 to 200 °C. When the melting temperature exceeds an upper limit, the cure reaction may proceed, and when the melting temperature is lower than a lower limit, heat fusion is insufficient, and during a handling operation, there is a concern of fine powder of the phenoxy resin (A) or the bonding resin composition dropping off and falling off.

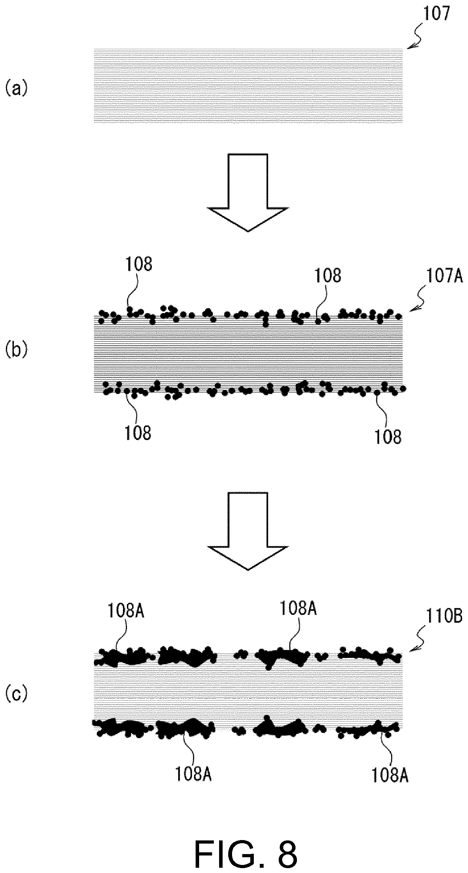

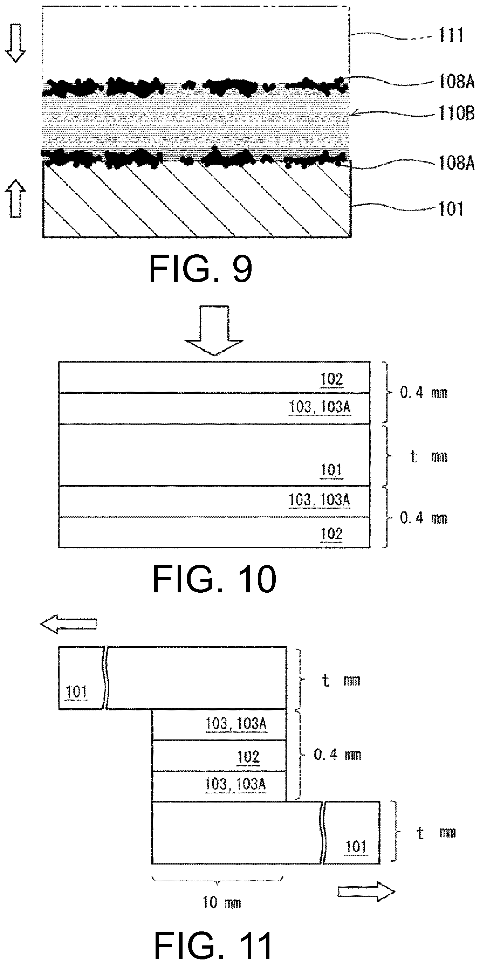

Here, a method for producing the bonding sheet 110B by a powder coating method will be described in further detail with reference to FIG. 8 and FIG. 9. Here, a case in which the bonding sheet 110B in which a partially fused structure 108A of the phenoxy resin (A) or the bonding resin composition (hereinafter collectively referred to as a "raw material resin") is formed on both surfaces of the reinforced fiber base material is produced will be exemplified. For example, the following method A1 or method A2 can be performed.

(Method A1)

The method A1 can include the following process a and process b.

Process a:

In the process a, as shown in FIGs. 8(a) and 8(b), a fine powder 108 of a raw material resin which is a solid at room temperature is attached to at least one side surface of a sheet-like reinforced fiber base material formed of the reinforced-fiber material 107 by a powder coating method and thus a resin-attached fiber base material 107A is formed. In the powder coating method, since the raw material resin composition is fine particles and is easily melted, and appropriate voids are retained in the coating film after coating, it becomes an air flow path and voids are unlikely to be generated. As will be described below, when the bonding sheet 110B and the metal member 101 are subjected to thermocompression, first, the resin melted on the surface of the prepreg is quickly wet and spreads on the surface of the metal member 101 and then impregnated into the reinforced fiber base material. Therefore, compared to a melt impregnation method of the related art, defects due to insufficient wettability of the resin melted on the surface of the metal member 101 are less likely to occur. That is, in a melt impregnation method for binding the metal member 101 using the resin extruded from the reinforced fiber base material, in the produced prepreg, wettability of the resin melted on the surface of the metal member 101 tends to be insufficient. However, this problem can be avoided in the powder coating method. A preferable type of the powder coating method, coating conditions, the resin proportion (RC), and the like are as described above.

Here, FIG. 8(b) shows a state in which the fine powder 108 of the raw material resin is attached to both side surfaces of the resin-attached fiber base material 107A, but the fine powder 108 may be attached to only one side surface of the resin-attached fiber base material 107A.

Process b:

In the process b, as shown in FIGs. 8(b) and 8(c), the resin-attached fiber base material 107A is subjected to a heat treatment and the fine powder 108 of the raw material resin is incompletely melted and then solidified, and thus the bonding sheet 110B which is a prepreg having the partially fused structure 108A formed of the raw material resin is formed. In "the partially fused structure 108A," in the vicinity of the surface layer part of the reinforced fiber base material, the fine powder 108 is partially melted due to a heat treatment, and a molten material of the adjacent fine powder 108 is fused and solidified in a mesh-like linked state. According to the partially fused structure 108A, adhesion to the reinforced fiber base material is improved and it is possible to prevent the fine powder 108 from falling off, and a certain air permeability in the thickness direction of the reinforced fiber base material is secured. Therefore, in a heat and press treatment in which the metal member 101 is subjected to thermocompression, an air flow path in the reinforced fiber base material is secured and generation of voids can be avoided. Preferably, the partially fused structure 108A is uniformly formed on the entire surface of the bonding sheet 110B, and may be unevenly distributed microscopically.

Here, FIG. 8(c) shows a state in which the partially fused structure 108A is formed on both side surfaces of the bonding sheet 110B, but the partially fused structure 108A may be formed only one side surface of the bonding sheet 110B.

(Heat treatment conditions)

In the heat treatment for forming the partially fused structure 108A, in order for the fine powder 108 of the raw material resin to be incompletely melted, according to the melting point and Tg of the raw material resin to be used, the heat treatment is preferably performed in a temperature range of about 100 °C to 400 °C, and a temperature equal to or lower than the melting point is more preferable when the raw material resin is a crystalline resin, and a temperature equal to or lower than Tg+150 °C is more preferable when the raw material resin is a non-crystalline resin. When the heat treatment exceeds an upper limit, thermal melting of the fine powder 108 goes too far, the partially fused structure 108A is not formed, and air permeability can be impaired. In addition, when the temperature is lower than the lower limit of the heating temperature, the partially fused structure 108A is not formed, heat fusion to the reinforced fiber base material is insufficient, and during a handling operation of the bonding sheet 110B, there is a concern of the fine powder 108 from dropping off and falling off.

In addition, the heat treatment time is not particularly limited as long as the fine powder 108 of the raw material resin attached to the reinforced fiber base material can be fixed to the reinforced fiber base material, and for example, 1 to 5 minutes is suitable. That is, when the heat treatment is performed for a much shorter time than molding, the resin of the partially fused structure 108A can be fixed to the reinforced fiber base material, and it is possible to prevent powder from falling off.

In the step of the bonding sheet 110B after the heat treatment, the raw material resin (the partially fused structure 108A and the fine powder 108 without change) is concentrated in the vicinity of the surface of the reinforced fiber base material and does not enter the inside of the reinforced fiber base material like a molded article after heating and pressurizing. Here, the heat treatment may be performed when the resin-attached fiber base material 107A is in contact with the metal member 101.

(Thickness)

The thickness of the bonding sheet 110B is preferably in a range of 40 to 200 $\mu$m and more preferably in a range of 50 to 150 $\mu$m. When the thickness of the bonding sheet 110B is less than 40 $\mu$m, impregnation failure may occur due to deterioration of handling properties and an insufficient resin. When the thickness of the bonding sheet 110B exceeds 200 $\mu$m, impregnation of the melted resin into the reinforced fiber base material after heating and pressurizing is insufficient, which can lead a decrease in the mechanical strength.

(Air permeability)

When the thickness of the bonding sheet 110B is 40 to 200 $\mu$m, the air permeability in the thickness direction is preferably in a range of 500 to 1,000 cc/cm$^2$/sec and more preferably in a range of 700 to 900 cc/cm$^2$/sec. When the air permeability is less than 500 cc/cm$^2$/sec, in a heat and press treatment in which the metal member 101 is subjected to thermocompression, an air flow path in the bonding sheet 110B decreases and voids are easily generated. That is, in bonding with the dense metal member 101, since it is important for air present in the bonding sheet 110B to escape to the side opposite to the bonding surface in the thickness direction, degassing from the bonding sheet 110B can be easily performed by controlling the air permeability to 500 cc/cm$^2$/sec or higher. On the other hand, when the air permeability exceeds 1,000 cc/cm$^2$/sec, the fine powder 108 of the raw material resin easily falls off and handling properties can deteriorate.

Regarding irregularities of the surface of the bonding sheet 110B, the surface roughness is preferably an arithmetic average roughness (Ra) of 0.010 to 0.100 mm and more preferably 0.015 to 0.075 mm. When Ra is within the above range, in a heat and press treatment in which the metal member 101 is subjected to thermocompression, air in the bonding sheet 110B can also escape from the side. Therefore, in bonding in which the bonding sheet 110B is interposed between the dense metal members 101, the bonding sheet 110B and the metal member 101 are firmly bonded, and the metal-FRP composite body 200 having an excellent mechanical strength is obtained.

Here, when Ra is less than 0.010 mm, since the bonding sheet 110B and other prepregs are easily fused in the heat and press treatment, there is no air flow path, which causes generations of voids. On the other hand, when Ra exceeds 0.100 mm, it is not suitable because voids remain.

(Resin concentration gradient in a prepreg)

In the bonding sheet 110B in which the partially fused structure 108A formed of the raw material resin is formed, based on the end surface of the original reinforced fiber base material, preferably 10 weight% or more and more preferably 10 to 40 weight% of the raw material resin within a range of 0 to 50% in the thickness direction is attached with respect to the thickness of the reinforced fiber base material. In this manner, if a gradient is provided in an attachment concentration of the raw material resin, when a surface of the bonding sheet 110B on which the partially fused structure 108A is formed is brought into contact with the metal member 101 and heated and pressurized, the sufficient melted resin can spread on the boundary between the bonding sheet 110B and the metal member 101. That is, when a high concentration solid raw material resin containing the partially fused structure 108A is brought into contact with the surface using properties of the metal member 101 such as high thermal conductivity and being easily heated, melting of the resin can be promoted and a large amount of the melted resin can be supplied to the bonding boundary. Therefore, a raw material resin having a relatively high melt viscosity can be made to penetrate the entire bonding sheet 110B in a short time and the bonding resin layer 103A can be formed. Here, when the partially fused structure 108A is formed, even if a resin concentration on the surface side to be bonded to the metal member 101 is made higher, the air permeability is controlled so that it is within the above range. Therefore, when the metal member 101 is subjected to thermocompression, since air present in the bonding sheet 110B can escape to the side opposite to the bonding surface in the thickness direction of the bonding sheet 110B, generation of voids can be avoided.

(Method A2)

The method A2 is a method in which the process a and the process b in the method A1 are collectively performed. That is, although not shown, the fine powder 108 of the raw material resin which is a solid at room temperature is attached to at least one side surface of the sheet-like reinforced fiber base material heated to a predetermined temperature by a powder coating method, the fine powder 108 is incompletely melted, and then solidified, and thus the bonding sheet 110B in which the partially fused structure 108A is formed is formed. In the method A1, the powder-coated fine powder 108 is fixed to the reinforced fiber base material according to the heat treatment. However, in the method A2, powder coating of the fine powder 108 is performed on the reinforced fiber base material heated in advance and thus fusion is performed simultaneously with application to the reinforced fiber base material to form the partially fused structure 108A.

The conditions in the method A2 are omitted because they are the same as in the method A1.

FIG. 9 shows an example of a form in which the metal member 101, the bonding sheet 110B, and the FRP molding prepreg 111, which is a precursor of the FRP layer 102, are subjected to thermocompression. The heat and press treatment is performed when a surface on which the partially fused structure 108A of the bonding sheet 110B is formed is brought into contact with at least a surface of the metal member 101, preferably a surface of the metal member 101 and a surface of the FRP molding prepreg 111, and thus the raw material resin attached to the bonding sheet 110B is completely melted and wet and spreads on the surface of the metal member 101, and at the same time, is impregnated into the reinforced fiber base material. The raw material resin impregnated in this manner is cured to form the matrix resin 106 and the bonding resin layer 103A is formed, and thus the bonding resin layer 103A is firmly bonded to the metal member 101 and the FRP layer 102. In addition, when the partially fused structure 108A of the raw material resin in the bonding sheet 110B is brought into contact with the metal member 101 in the heat and press treatment and wet and spreads in a thin film form, the bondability between the bonding resin layer 103A and the metal member 101, and between the bonding resin layer 103A and the FRP layer 102 is improved, and the metal-FRP composite body 200 in which the FRP layer 102 and the metal member 101 are firmly bonded can be formed.

In the thermocompression process, the raw material resin is completely melted due to heat and becomes a liquid, and penetrates into the bonding sheet 110B due to pressurizing. Since an air flow path is secured in the bonding sheet 110B having an air permeability that is controlled so that it has a predetermined level, the melted resin penetrates while expelling air, impregnation is completed in a short time even at a relatively low pressure, and generation of voids can be avoided.

The thermocompression temperature can be appropriately set according to the melting point and Tg of the raw material resin to be used because the fine powder 108 of the raw material resin and the partially fused structure 108A are completely melted and impregnated into the entire reinforced fiber base material. Here, conditions in which the bonding sheet 110B is subjected to thermocompression with the metal member 101 are as described above.

Simultaneously with thermocompression, the metal member 101, the bonding sheet 110B, and the FRP molding prepreg 111 may be molded and processed into an arbitrary three-dimensional shape. In this case, the pressure at which the metal member 101, the bonding sheet 110B, and the FRP molding prepreg 111 are compressed and molded is preferably based on a pressure necessary for pressing and molding the metal member 101. In this manner, it is preferable to produce a composite body having a three-dimensional shape by batch molding the metal member 101, the bonding sheet 110B, and the FRP molding prepreg 111. However, the bonding sheet 110B and the FRP molding prepreg 111 may be compressed on the metal member 101 molded into an arbitrary three-dimensional shape in advance.

Combinatory batch molding of the metal member 101 and the FRP layer 102 using a press molding device is preferably performed by hot pressing. However, it is possible to perform processing by quickly setting a material preheated to a predetermined temperature in advance in a press molding device at a low temperature. When a member is set in a thermoforming device, the metal member 101, the bonding sheet 110B, and the FRP molding prepreg 111 may be temporarily fixed in advance. Temporary fixing conditions are not particularly limited as long as the partially fused structure 108A of the bonding sheet 110B is maintained and the air permeability is secured.

Here, regarding the FRP molding prepreg 111 used to form the FRP layer 102, for those adjacent to at least the bonding resin layers 103 and 103A, prepregs produced by the above powder coating method are preferably used. In particular, the bonding resin layer 103A and the FRP molding prepreg 111 that are both produced by the powder coating method are used, and thus the two components are mixed together and integrated at a rough interface therebetween during thermocompression. Therefore, it is possible to improve the bonding strength between the bonding resin layer 103A and the FRP layer 102.

Examples

The present invention will be described below in further detail with reference to examples, and the present invention is not limited to those described in such examples. Here, tests of various physical properties and measurement methods in examples and comparative examples are as follows.

[Average particle size (D50)]

Regarding the average particle size, a particle size at which a cumulative volume was 50% based on the volume was measured using a laser diffraction and scattering type particle size distribution measuring device (Micro Trak MT3300EX, commercially available from Nikkiso Co., Ltd.).

[Melt viscosity]

A sample with a size of 4.3 $cm^3$ was interposed between parallel plates using a rheometer (commercially available from Anton Paar), while raising the temperature at 20 °C/min, the melt viscosity at 250 °C was measured under conditions of a frequency of 1 Hz and a load strain of 5%. However, in a crosslinkable (bondable) resin composition, a minimum value of the viscosity at 160 °C to 250 °C was set as a melt viscosity.

[Resin proportion (RC: %)]

A resin proportion was calculated from a weight (W1) of a reinforced fiber base material before the matrix resin was attached and a weight (W2) of an FRP molding material after the resin was attached using the following formula.

$$\text{Resin proportion } (RC: \%) = (W2 - W1)/W2 \times 100$$

W1: weight of the reinforced fiber base material before the resin is attached
W2: weight of the FRP molding material after the resin is attached

[Measurement of the thickness of the bonding resin layer]

The metal-FRP composite body 100 was cut using a diamond cutter, and the obtained cross section was polished with abrasive paper and diamond abrasive grains, and then polished using a cross section polisher (CP) treatment, and observed under a scanning electron microscope (SEM), and thereby the thickness was measured.

[Bending test]

Mechanical properties (bending strength and flexural modulus) of the obtained metal-FRP composite body were measured according to the JIS K 7074: 1988 fiber-reinforced plastic bending test method.
As shown in FIG. 10, an FRP laminate was disposed on both sides of the metal member 101 with a thickness of t mm so that a total thickness (here, refers to a total thickness of the FRP layer 102 and the bonding resin layer 103 or 103A) was 0.4 mm, and subjected to thermocompression under conditions shown in examples and comparative examples, and thereby samples of a metal-FRP composite body for a bending test were obtained. The white arrow in FIG. 10 indicates a load application direction.
Here, when the mechanical strength was measured, it was evaluated as × (poor) when the metal plate was interfacially-peeled off from the FRP laminate when the sample was broken, it was evaluated as △ (good) when the metal plate was cohesive-peeled off, and it was evaluated as ○ (very good) when there was no peeling off.

[Shear test]

Measurement was performed with reference to the tensile shear bonding strength test method for the bonding agent according to JIS K 6850: 1999.
As shown in FIG. 11, two metal members 101 processed into a size of a thickness of t mm, a width of 5 mm and a length of 60 mm were prepared, and respective parts of 10 mm from ends of the metal members 101 were bonded to an FRP laminate formed to have a total thickness of 0.4 mm (here, refers to a total thickness of the FRP layer 102 and the bonding resin layer 103 or 103A), and thereby samples of a metal-FRP composite body for a shear test were produced. That is, the samples of a metal-FRP composite body for a shear test were produced by inserting an FRP laminate between vicinities of ends of two upper and lower metal members 101, and performing thermocompression under conditions shown in examples and comparative examples. Two white arrows in FIG. 11 indicate a tensile load application direction.

[FRP prepregs]

- Polyamide resin CFRP prepreg (prepreg F)
  BHH-100GWODPT1/PA commercially available from Sakai Ovex Co., Ltd., Vf (fiber volume content): 47%
- Polycarbonate resin CFRP prepreg (prepreg G)
  BHH-100GWODPT1/PC commercially available from Sakai Ovex Co., Ltd., Vf (fiber volume content): 47%
- Polypropylene resin CFRP prepreg (prepreg H)
  BHH-100GWODPT1/PP commercially available from Sakai Ovex Co., Ltd., Vf (fiber volume content): 47%

[Phenoxy resin (A)]

(A-1): Pheno Tohto YP-50S (commercially available from Nippon Steel & Sumikin Chemical Co., Ltd., bisphenol A type, Mw=40,000, hydroxyl equivalent = 284 g/eq), the melt viscosity at 250 °C=90 Pa·s, Tg=83 °C
(A-2): Pheno Tohto YPB-43C (commercially available from Nippon Steel & Sumikin Chemical Co., Ltd., brominated phenoxy resin, Mw=60,000, hydroxyl group equal amount = 600 g/eq), the melt viscosity at 250 °C=500 Pa·s, Tg=149 °C

[Epoxy resin (B)]

YSLV-80XY (commercially available from Nippon Steel & Sumikin Chemical Co., Ltd., tetramethyl bisphenol F type, epoxy equivalent=192 g/eq, melting point=72 °C)

[Crosslinking agent (C)]

Ethylene glycol bis anhydro trimellitate: TMEG
(Acid anhydride equal amount: 207, melting point: 160 °C)

[Polyamide resin (R-1)]

CM1017 (commercially available from Toray Industries, Inc., melting point=225 °C, the melt viscosity at 250 °C=125 Pa·s, Tg=55 °C)

[Production Example 1]

[Production of a phenoxy resin CFRP prepreg A]

A powder obtained by pulverizing and classifying A-1 and having an average particle size D50 of 80 μm was used as the phenoxy resin (A), carbon fibers (UD material: Pyrofil TR50S 15L commercially available from Mitsubishi Rayon Co., Ltd.) that were opened and aligned in one direction were used as a base material, and in an electrostatic field, powder coating was performed under conditions of a charge of 70 kV and a spray air pressure of 0.32 MPa. Then, heating and melting were performed in an oven at 170 °C for 1 minute, the resin was thermally fused to form a partially fused structure, and thereby a unidirectional fiber-reinforced phenoxy resin CFRP prepreg A having a thickness of 0.15 mm and a resin proportion (RC) of 48% was produced.

[Production Example 2]

[Production of a phenoxy resin CFRP prepreg B]

A powder obtained by pulverizing and classifying A-2 and having an average particle size D50 of 80 μm was used as the phenoxy resin (A), carbon fibers (UD material: Pyrofil TR50S 15L commercially available from Mitsubishi Rayon Co., Ltd.) that were opened and aligned in one direction were used as a reinforced fiber base material, and in an electrostatic field, powder coating was performed under conditions of a charge of 70 kV and a spray air pressure of 0.32 MPa. Then, heating and melting were performed in an oven at 170 °C for 1 minute, the resin was thermally fused, and thereby a unidirectional fiber-reinforced phenoxy resin CFRP prepreg B having a thickness of 0.15 mm and a resin proportion (RC) of 50% was produced.

[Production Example 3]

[Production of a crosslinked phenoxy resin CFRP prepreg C]

100 parts by weight of A-1 as the phenoxy resin (A), 30 parts by weight of the epoxy resin (B), and 73 parts by weight of the crosslinking agent (C) were prepared and they were pulverized and classified to obtain a powder having an average particle size D50 of 80 μm, and dried and blended using a dry powder mixer (Rocking mixer commercially available from Aichi Electric Co., Ltd.). In the obtained crosslinkable phenoxy resin composition, carbon fibers (UD material: Pyrofil TR50S 15L commercially available from Mitsubishi Rayon Co., Ltd.) that were opened and aligned in one direction were used as a reinforced fiber base material, and in an electrostatic field, powder coating was performed under conditions of a charge of 70 kV and a spray air pressure of 0.32 MPa. Then, heating and melting were performed in an oven at 170 °C for 1 minute, the resin was thermally fused to form a partially fused structure, and thereby a crosslinked phenoxy resin CFRP prepreg C having a thickness of 0.16 mm and a resin proportion (RC) of 48% was produced.
Here, the melt viscosity of the crosslinkable phenoxy resin composition at 250 °C was 250 Pa·s. In addition, in order to obtain Tg of the phenoxy resin after crosslinking and curing, a plurality of produced prepregs were laminated and pressurized in a press machine heated to 200 °C at 3 MPa for 3 minutes to produce a CFRP laminate having a thickness of 2 mm, the laminate was post-cured at 170 °C for 30 minutes, and then cut into a test piece with a width of 10 mm and a length of 10 mm using a diamond cutter, and measurement was performed using a dynamic viscoelasticity measuring device (DMA 7e commercially available from Perkin Elmer) under heating conditions of 5 °C/min in a range of 25 to 250 °C, and the maximum peak of the obtained tanδ was set as Tg.

[Production Example 4]

[Production of a phenoxy resin CFRP prepreg D]

A powder obtained by pulverizing and classifying A-1 and having an average particle size D50 of 80 μm was used as the phenoxy resin (A), and powder coating was performed under conditions of a charge of 70 kV and a spray air pressure of 0.32 MPa on an open fiber product (SA-3203 commercially available from Sakai Ovex Co., Ltd.) of a plain fabric reinforced fiber base material (cloth material: IMS60 commercially available from Toho Tenax Co., Ltd.) made of carbon fibers in an electrostatic field. Then, heating and melting were performed in an oven at 170 °C for 1 minute, the resin was thermally fused to form a partially fused structure, and thereby a unidirectional fiber-reinforced phenoxy resin CFRP prepreg D having a thickness of 0.24 mm and a resin proportion (RC) of 48% was produced.

[Production Example 5]

[Production of a crosslinked phenoxy resin CFRP prepreg E]

100 parts by weight of A-1 as the phenoxy resin (A), 30 parts by weight of the epoxy resin (B), and 73 parts by weight of the crosslinking agent (C) were prepared and they were pulverized and classified to obtain a powder having an average particle size D50 of 80 μm, and dried and blended using a dry powder mixer (Rocking mixer commercially available from Aichi Electric Co., Ltd.). In the obtained crosslinkable phenoxy resin composition, powder coating was performed under conditions of a charge of 70 kV and a spray air pressure of 0.32 MPa on an open fiber product (SA-3203 commercially available from Sakai Ovex Co., Ltd.) of a plain fabric reinforced fiber base material (cloth material: IMS60 commercially available from Toho Tenax Co., Ltd.) made of carbon fibers in an electrostatic field. Then, heating and melting were performed in an oven at 170 °C for 1 minute, the resin was thermally fused to form a partially fused structure, and thereby a crosslinked phenoxy resin CFRP prepreg E having a thickness of 0.25 mm and a resin proportion (RC) of 48% was produced.

[Production Example 6]

[Production of an epoxy resin CFRP prepreg K]

26 parts by weight of a bisphenol A type epoxy resin (YD-128 commercially available from Nippon Steel & Sumikin Chemical Co., Ltd.), 50 parts by weight of a phenolic novolac type epoxy resin (YDPN-638 commercially available from Nippon Steel & Sumikin Chemical Co., Ltd.), and 15 parts by weight of a phenoxy resin (YP-70 commercially available from Nippon Steel & Sumikin Chemical Co., Ltd.) were kneaded in a kneading machine while heating to 160 °C, a solid component was completely dissolved, and thereby a transparent viscous liquid was obtained. Subsequently, the temperature was lowered to 50 to 60 °C while continuing kneading, and then 5 parts by weight of dicyanamide as a curing agent, and 4 parts by weight of dimethyl urea as a curing promoter were added thereto and stirred so that they were uniformly dispersed and thereby an epoxy resin composition was obtained. Here, the viscosity of the epoxy resin composition measured using a cone plate viscometer at a predetermined temperature (90 °C) was 4 Pa·s, and Tg of the cured product was 136 °C.

Subsequently, the epoxy resin composition was applied to a released PET film using a coater to produce an epoxy resin film having a thickness of 20 μm. Next, the resin film was superimposed on an open fiber product (SA-3203 commercially available from Sakai Ovex Co., Ltd.) of a plain fabric reinforced fiber base material (cloth material: IMS60 commercially available from Toho Tenax Co., Ltd.) made of carbon fibers from both surfaces, and heated and pressurized under conditions of a temperature of 95 °C and a pressure of 0.2 MPa, an epoxy resin composition for a carbon-fiber-reinforced composite material was impregnated, and thereby an epoxy resin CFRP prepreg K having a resin proportion (RC) of 48% and a thickness of 0.20 mm was produced.

[Production of a bonding resin sheet A]

A-1 was used as the phenoxy resin (A), a phenoxy resin was melted in an extruder heated to 200 to 230 °C, and a bonding resin sheet A having a thickness of 0.02 mm was produced by an inflation method.

[Production of a bonding resin powder]

[Bonding resin powder a]

The crosslinkable phenoxy resin composition powder used in Production Example 3 was used without change.

[Bonding resin powder b]

50 parts by weight of a phenoxy resin A-1 powder, and 50 parts by weight of a polyamide resin R-1 powder having an average particle size of 50 $\mu$m produced using a dry grinding machine at a low temperature were dried and blended using a dry powder mixer (Rocking mixer commercially available from Aichi Electric Co., Ltd.) to produce a bonding resin powder b.

[Bonding resin powder c]

20 parts by weight of a phenoxy resin A-1 powder and 80 parts by weight of a polyamide resin R-1 powder having an average particle size of 50 $\mu$m produced using a dry grinding machine at a low temperature were dried and blended using a dry powder mixer (Rocking mixer commercially available from Aichi Electric Co., Ltd.) to produce a bonding resin powder c.

[Metal member]

- Metal member (M-1): EG
  Electro galvanized zinc plated steel NSECC (commercially available from Nippon Steel Corporation), a thickness of 0.4 mm, no chemical conversion treatment

- Metal member (M-2): aluminum
  BACS thick plate series (commercially available from Hikari Co., Ltd.), aluminum (A1050P), a thickness of 1 mm

- Metal member (M-3): stainless steel
  Sim plate (commercially available from Iwata MFG. Co., Ltd.), stainless steel (SUS304), a thickness of 0.4 mm

- Metal member (M-4): TFS
  Tin free steel plate (commercially available from Nippon Steel Corporation), a thickness of 0.2 mm

- Metal member (M-5): titanium
  Pure titanium plate (commercially available from The Nilaco Corporation), a thickness of 0.1 mm

- Metal member (M-6): magnesium alloy
  AZ31B (commercially available from Nippon Kinzoku Co., Ltd.) a thickness of 0.1 mm

[Example 1]

M-1 was used as the metal member 101, the phenoxy resin CFRP prepreg A of Production Example 1 was used as the bonding resin layer 103A and the FRP layer 102, and a sample of a metal-CFRP composite body for a bending test having a structure shown in FIG. 10 and a sample of a metal-CFRP composite body for a shear test having a structure shown in FIG. 11 were pressed in a press machine heated to 200 °C at 3 MPa for 3 minutes for production. The thickness of the bonding resin layer 103A was 0.07 mm. The obtained two samples were cooled and subjected to the bending test and the shear test.

[Example 2]

Two metal-CFRP composite body samples were produced in the same manner as in Example 1 except that the phenoxy resin CFRP prepreg D of Production Example 4 was used as the bonding resin layer 103A and the FRP layer 102. The thickness of the bonding resin layer 103A was 0.08 mm. The obtained two samples were cooled and subjected to the bending test and the shear test.

[Example 3]

Two metal-CFRP composite body samples were produced in the same manner as in Example 1 except that one bonding resin sheet A was used as the bonding resin layer 103 in place of the bonding resin layer 103A, and the phenoxy resin CFRP prepreg D of Production Example 4 was used as the FRP layer 102. The thickness of the bonding resin layer 103 was 0.02 mm. The obtained two samples were cooled and subjected to the bending test and the shear test.

[Example 4]

A bonding resin powder a was used as the raw material of the bonding resin layer 103 in place of the bonding resin layer 103A, and powder coating of a powder having the same weight as that when the bonding resin powder a became a film having a thickness of 20 $\mu$m was performed on M-1 as the metal member 101. Subsequently, heating was performed in an oven heated to 180 °C for 1 minute and thus the bonding resin powder a was fixed to the metal member 101. Next, together with the plurality of phenoxy resin prepregs D of Production Example 4 which became the FRP layer 102, heating was performed in a press machine heated to 200 °C at a pressure of 3 to 5 MPa for 5 minutes, and thereby two metal-CFRP composite body samples shown in FIG. 10 and FIG. 11 were produced. The thickness of the bonding resin layer 103 was 0.02 mm. The obtained two samples were cooled and subjected to the bending test and the shear test.

[Example 5]

A bonding resin powder b was used as the raw material of the bonding resin layer 103 in place of the bonding resin layer 103A, and powder coating of a powder having the same weight as that when the bonding resin powder b became a film having a thickness of 20 $\mu$m was performed on M-1 as the metal member 101. Subsequently, heating was performed in an oven heated to 180 °C for 1 minute and thus the bonding resin powder b was fixed to the metal member 101, and together with the plurality of phenoxy resin prepregs D of Production Example 4 which became the FRP layer 102, heating was performed in a press machine heated to 240 °C at a pressure of 3 to 5 MPa for 5 minutes, and two metal-CFRP composite body samples shown in FIG. 10 and FIG. 11 were produced. The thickness of the bonding resin layer 103 was 0.02 mm. The obtained two samples were cooled and subjected to the bending test and the shear test.

[Example 6]

Two metal-CFRP composite body samples shown in FIG. 10 and FIG. 11 were produced in the same manner as in Example 1 except that the crosslinked phenoxy resin CFRP prepreg E of Production Example 5 was used as the bonding resin layer 103A and the FRP layer 102, and post curing was performed in an oven at 170 °C for 30 minutes after pressing. The thickness of the bonding resin layer 103A was 0.07 mm. In addition, Tg of the matrix resin in the crosslinked phenoxy resin CFRP forming the bonding resin layer 103A and the FRP layer 102 was 83 °C for a cured product in a first cured state before crosslinking and curing and 186 °C for a cross-linked cured product in a second cured state after post curing. The obtained two samples were cooled and then subjected to the bending test and the shear test.

[Example 7]

Two metal-CFRP composite body samples shown in FIG. 10 and FIG. 11 were produced in the same manner as in Example 6 except that one bonding resin sheet A was used as the bonding resin layer 103 in place of the bonding resin layer 103A and the plurality of crosslinked phenoxy resin CFRP prepregs E of Production Example 5 were used as the FRP layer 102. The thickness of the bonding resin layer 103 was 0.02 mm. The obtained two samples were cooled and subjected to the bending test and the shear test.

[Example 8]

Two metal-CFRP composite body samples shown in FIG. 10 and FIG. 11 were produced in the same manner as in Example 6 except that one phenoxy resin prepreg D of Production Example 4 was used as the bonding resin layer 103A and the plurality of crosslinked phenoxy resin CFRP prepregs E of Production Example 5 were used as the FRP layer 102. The thickness of the bonding resin layer 103A was 0.08 mm. The obtained two samples were cooled and subjected to the bending test and the shear test.

[Example 9]

Two metal-CFRP composite body samples shown in FIG. 10 and FIG. 11 were produced in the same manner as in Example 1 except that one phenoxy resin prepreg A of Production Example 1 was used as the bonding resin layer 103A and the plurality of phenoxy resin CFRP prepregs B of Production Example 2 were used as the FRP layer 102. The thickness of the bonding resin layer 103A was 0.08 mm. The obtained two samples were cooled and subjected to the bending test and the shear test.

[Example 10]

Two metal-CFRP composite body samples shown in FIG. 10 and FIG. 11 were produced in the same manner as in Example 1 except that one phenoxy resin CFRP prepreg A of Production Example 1 was used as the bonding resin layer 103A, a plurality of commercially available polyamide resin CFRP prepregs F (using a UD material as a reinforced fiber base material made of carbon fibers) were used as the FRP layer 102, and the press temperature was 230 °C. The thickness of the bonding resin layer 103A was 0.07 mm. The obtained two samples were cooled and then subjected to the bending test and the shear test.

[Example 11]

A plurality of phenoxy resin CFRP prepregs D of Production Example 4 were laminated and heated and pressed in a press machine heated to 200 °C at a pressure of 5 MPa for 5 minutes and thereby a CFRP molded article having a thickness of 0.4 mm was produced. This was used as the FRP layer 102, one bonding resin film A was used as the bonding resin layer 103, and they were pressed together with the metal member 101 using M-1 in a press machine heated to 200 °C at 3 to 5 MPa for 3 minutes. Thereby, a sample of a metal-CFRP composite body for a bending test having a structure shown in FIG. 10 and a sample of a metal-CFRP composite body for a shear test having a structure shown in FIG. 11 were produced. The thickness of the bonding resin layer 103 was 0.02 mm. The obtained two samples were cooled and then subjected to the bending test and the shear test.

[Example 12]

M-2 was used as the metal member 101, and the phenoxy resin CFRP prepreg A of Production Example 1 was used as the bonding resin layer 103A and the FRP layer 102, and a sample of a metal-CFRP composite body for a bending test having a structure shown in FIG. 10 and a sample of a metal-CFRP composite body for a shear test having a structure shown in FIG. 11 were produced by performing pressing in a press machine heated to 200 °C at 3 to 5 MPa for 3 minutes. The thickness of the bonding resin layer 103A was 0.07 mm. The obtained two samples were cooled and subjected to the bending test and the shear test.

[Example 13]

Two metal-CFRP composite body samples shown in FIG. 10 and FIG. 11 were produced in the same manner as in Example 12 except that M-3 was used as the metal member 101. The thickness of the bonding resin layer 103A was 0.07 mm. The obtained two samples were cooled and subjected to the bending test and the shear test.

[Example 14]

M-2 was used as the metal member 101, and the crosslinked phenoxy resin prepreg C of Production Example 3 was used as the bonding resin layer 103A and the FRP layer 102, and a sample of a metal-CFRP composite body for a bending test having a structure shown in FIG. 10 and a sample of a metal-CFRP composite body for a shear test having a structure shown in FIG. 11 were pressed in a press machine heated to 120 °C at 1 MPa for 1 minute and thus the bonding resin layer 103A and the FRP layer 102 were brought into a first cured state. Subsequently, pressing was performed in a press machine heated to 200 °C at 3 to 5 MPa for 3 minutes, and post curing was then performed in an oven at 170 °C for 30 minutes, and thereby two samples were produced. The thickness of the bonding resin layer 103A was 0.07 mm. In addition, Tg of the matrix resin in the crosslinked phenoxy resin CFRP forming the bonding resin layer 103A and the FRP layer 102 was 83 °C for a cured product in a first cured state before crosslinking and curing and 186 °C for a cross-linked cured product in a second cured state after post curing. The obtained two samples were cooled and subjected to the bending test and the shear test.

[Example 15]

Two metal-CFRP composite body samples shown in FIG. 10 and FIG. 11 were produced in the same manner as in Example 14 except that M-3 was used as the metal member 101. The thickness of the bonding resin layer 103A was 0.07 mm. In addition, Tg of the matrix resin in the crosslinked phenoxy resin CFRP forming the bonding resin layer 103A and the FRP layer 102 was 83 °C for a cured product in a first cured state before crosslinking and curing and 186 °C for a cross-linked cured product in a second cured state after post curing. The obtained two samples were cooled and subjected to the bending test and the shear test.

[Example 16]

M-4 was used as the metal member 101, and the phenoxy resin CFRP prepreg A of Production Example 1 was used as the bonding resin layer 103A and the FRP layer 102, and a sample of a metal-CFRP composite body having a structure shown in FIG. 10 was produced by performing pressing in a press machine heated to 200 °C at 3 MPa for 3 minutes. The thickness of the bonding resin layer 103A was 0.07 mm. When the obtained sample was cooled and then subjected to the bending test according to JIS K 7074: 1988, the bending strength was 734 MPa, and the flexural modulus was 68 GPa.

[Example 17]

A sample of a metal-CFRP composite body shown in FIG. 10 was produced in the same manner as in Example 16 except that M-5 was used as the metal member 101. The thickness of the bonding resin layer 103A was 0.07 mm. When the obtained sample was cooled and then subjected to the bending test according to JIS K 7074: 1988, the bending strength was 812 MPa, and the flexural modulus was 53 GPa.

[Example 18]

A sample of a metal-CFRP composite body shown in FIG. 10 was produced in the same manner as in Example 16 except that M-6 was used as the metal member 101. The thickness of the bonding resin layer 103A was 0.07 mm. When the obtained sample was cooled and then subjected to the bending test according to JIS K 7074: 1988, the bending strength was 684 MPa, and the flexural modulus was 54 GPa.

[Example 19]

M-4 was used as the metal member 101, the crosslinked phenoxy resin CFRP prepreg C of Production Example 3 was used as the bonding resin layer 103A and the FRP layer 102, a metal-CFRP composite body having a structure shown in FIG. 10 was pressed in a press machine heated to 200 °C at 3 MPa for 3 minutes, and post curing was then performed in an oven at 170 °C for 30 minutes for production. The thickness of the bonding resin layer 103A was 0.07 mm. When the obtained sample was cooled and then subjected to the bending test according to JIS K 7074: 1988, the bending strength was 622 MPa, and the flexural modulus was 76 GPa.

[Example 20]

A sample of a metal-CFRP composite body shown in FIG. 10 was produced in the same manner as in Example 19 except that M-5 was used as the metal member 101. The thickness of the bonding resin layer 103A was 0.07 mm. When the obtained sample was cooled and then subjected to the bending test according to JIS K 7074: 1988, the bending strength was 688 MPa, and the flexural modulus was 59 GPa.

[Example 21]

A sample of a metal-CFRP composite body shown in FIG. 10 was produced in the same manner as in Example 19 except that M-6 was used as the metal member 101. The thickness of the bonding resin layer 103A was 0.07 mm. When the obtained sample was cooled and then subjected to the bending test according to JIS K 7074: 1988, the bending strength was 580 MPa, and the flexural modulus was 60 GPa.

[Comparative Example 1]

Two metal-CFRP composite body samples having structures according to FIG. 10 and FIG. 11 were produced in the same manner as in Example 1 except that no bonding resin layer 103A was provided, a commercially available polyamide resin CFRP prepreg F (using a UD material as a reinforced fiber base material made of carbon fibers) was used as the FRP layer 102, and the press temperature was 230 °C. The obtained two samples were cooled and then subjected to the bending test and the shear test.

[Comparative Example 2]

Two metal-CFRP composite body samples having structures according to FIG. 10 and FIG. 11 were produced in the same manner as in Example 1 except that no bonding resin layer 103A was provided, a commercially available polycarbonate resin CFRP prepreg G (using a UD material as a reinforced fiber base material made of carbon fibers) was used as the FRP layer 102, and the press temperature was 230 °C. The obtained two samples were cooled and then subjected to the bending test and the shear test.

[Comparative Example 3]

Two metal-CFRP composite body samples having structures according to FIG. 10 and FIG. 11 were produced in the same manner as in Example 1 except that no bonding resin layer 103A was provided and a commercially available polypropylene resin CFRP prepreg H (using a UD material as a reinforced fiber base material made of carbon fibers) was used as the FRP layer 102, and the press temperature was 230 °C. The obtained two samples were cooled and then subjected to the bending test and the shear test.

[Comparative Example 4]

No bonding resin layer 103A was provided, M-1 was used as the metal member 101, and the epoxy resin CFRP prepreg K of Production Example 6 was used as the FRP layer 102, and a sample of a metal-CFRP composite body for a bending test having a structure according to FIG. 10 and a sample of a metal-CFRP composite body for a shear test having a structure according to FIG. 11 were produced, and pressed in a press machine heated to 200 °C at 3 MPa for 3 minutes. Then, the samples were subjected to post curing in an oven at 170 °C for 30 minutes. The obtained two samples were cooled and subjected to the bending test and the shear test.

[Comparative Example 5]

A plurality of phenoxy resin CFRP prepregs D of Production Example 4 were laminated and heated and pressed in a press machine heated to 200 °C at a pressure of 5 MPa for 5 minutes, and thereby a CFRP molded article having a thickness of 0.4 mm was produced. This was used as the FRP layer 102, no bonding resin layer 103A was provided, and directly, pressing was performed with the metal member 101 using M-1 in a press machine heated to 200 °C at 3 to 5 MPa for 3 minutes, and thereby a sample of a metal-CFRP composite body for a bending test having a structure according to FIG. 10 and a sample of a metal-CFRP composite body for a shear test having a structure according to FIG. 11 were produced. Here, in this case, the metal member 101 and the FRP layer 102 were bonded by a resin component exuded from the FRP layer 102. The obtained two samples were cooled and then subjected to the bending test and the shear test.

[Comparative Example 6]

A plurality of phenoxy resin CFRP prepregs D of Production Example 4 were laminated and pressed in a press machine heated to 200 °C at a pressure of 5 MPa for 5 minutes and thereby a CFRP molded article having a thickness of 0.4mm was produced. This was used as the FRP layer 102, adhesion to the metal member 101 using M-1 to which an epoxy resin varnish (Araldite commercially available from Huntsman Corporation) which became a bonding resin layer was applied was performed, an adhesion surface was cured at room temperature for 24 hours while it was fixed with a clip, and thereby a sample of a metal-CFRP composite body for a bending test having a structure according to FIG. 10 and a sample of a metal-CFRP composite body for a shear test having a structure according to FIG. 11 were produced. The thickness of the bonding resin layer was 0.09 mm. The obtained two samples were cooled and then subjected to the bending test and the shear test.

[Comparative Example 7]

Two metal-CFRP composite body samples having structures according to FIG. 10 and FIG. 11 were produced in the same manner as in Example 5 except that the bonding resin powder c was used as the raw material of the bonding resin layer and the phenoxy resin CFRP prepreg D of Production Example 4 was used as the FRP layer 102. The thickness of the bonding resin layer was 0.016 mm. The obtained two samples were cooled and subjected to the bending test and the shear test.

[Comparative Example 8]

Two metal-CFRP composite body samples having structures according to FIG. 10 and FIG. 11 were produced in the same manner as in Example 12 except that no bonding resin layer 103A was provided, a commercially available polyamide resin CFRP prepreg F was used as the FRP layer 102, and the press temperature was 230 °C. The obtained two samples were cooled and subjected to the bending test and the shear test.

[Comparative Example 9]

Two metal-CFRP composite body samples having structures according to FIG. 10 and FIG. 11 were produced in the same manner as in Example 12 except that no bonding resin layer 103A was provided, a commercially available polycarbonate resin CFRP prepreg G was used as the FRP layer 102, and the press temperature was 230 °C. The obtained two samples were cooled and subjected to the bending test and the shear test.

[Comparative Example 10]

Two metal-CFRP composite body samples having structures according to FIG. 10 and FIG. 11 were produced in the same manner as in Example 12 except that no bonding resin layer 103A was provided, a commercially available polypropylene resin CFRP prepreg H was used as the FRP layer 102, and the press temperature was 230 °C. The obtained two samples were cooled and subjected to the bending test and the shear test.

[Comparative Example 11]

Two metal-CFRP composite body samples having structures according to FIG. 10 and FIG. 11 were produced in the same manner as in Example 13 except that no bonding resin layer 103A was provided, a commercially available polyamide resin CFRP prepreg F was used as the FRP layer 102, and the press temperature was 230 °C. The obtained two samples were cooled and subjected to the bending test and the shear test.

[Comparative Example 12]

Two metal-CFRP composite body samples having structures according to FIG. 10 and FIG. 11 were produced in the same manner as in Example 13 except that no bonding resin layer 103A was provided, a commercially available polycarbonate resin CFRP prepreg G was used as the FRP layer 102, and the press temperature was 230 °C. The obtained two samples were cooled and subjected to the bending test and the shear test.

[Comparative Example 13]

Two metal-CFRP composite body samples having structures according to FIG. 10 and FIG. 11 were produced in the same manner as in Example 13 except that no bonding resin layer 103A was provided, a commercially available polypropylene resin CFRP prepreg H was used as the FRP layer 102, and the press temperature was 230 °C. The obtained two samples were cooled and subjected to the bending test and the shear test.
The results of Examples 1 to 15 are shown in Table 1 to 3, and the results of Comparative Examples 1 to 13 are shown in Table 4 to Table 6.

[Table 1]

| | | | Example 1 | Example 2 | Example 3 | Example 4 | Example 5 |
|---|---|---|---|---|---|---|---|
| CFRP layer | Prepreg used | | A | D | D | D | D |
| | Type of matrix resin | | A-1 | A-1 | A-1 | A-1 | A-1 |
| | Glass transition point | °C | 83 | 83 | 83 | 83 | 83 |
| | Melt viscosity | Pa·s | 90 | 90 | 90 | 90 | 90 |
| | Type of fiber | | UD | Cloth | Cloth | Cloth | Cloth |
| Bonding resin layer | Type of resin | | A-1 | A-1 | A-1 | A-1 +epoxy+acid anhydride | A-1+PA |
| | Glass transition point | °C | 83 | 83 | 83 | 186 | - |
| | Melt viscosity | Pa·s | 90 | 90 | 90 | 250 | 295 |
| | Formation | | Prepreg A | Prepreg D | Sheet A | Powder a | Powder b |
| | Type of fiber | | UD | Cloth | None | None | None |
| | Phenoxy proportion | wt% | 100 | 100 | 100 | 77 | 50 |
| Metal plate | Type of metal | No. | M-1 | M-1 | M-1 | M-1 | M-1 |
| | | | EG | EG | EG | EG | EG |
| | Thickness | mm | 0.4 | 0.4 | 0.4 | 0.4 | 0.4 |
| Physical properties, evaluation items | Bending strength | MPa | 860 | 740 | 728 | 674 | 768 |
| | Flexural modulus | GPa | 49 | 58 | 57 | 58 | 56 |
| | Metal peeling off | | ○ | ○ | ○ | ○ | ○ |
| | Shear bonding | N/5 mm | 460 | 700 | 535 | 532 | 535 |

[Table 2]

| | | | Example 6 | Example 7 | Example 8 | Example 9 | Example 10 |
|---|---|---|---|---|---|---|---|
| CFRP layer | Prepreg used | | E | E | E | B | F |
| | Type of matrix resin | | A-1+epoxy+acid anhydride | A-1+epoxy+acid anhydride | A-1+epoxy+acid anhydride | A-2 | PA |
| | Glass transition point | °C | 186 | 186 | 186 | 149 | - |
| | Melt viscosity | Pa·s | 250 | 250 | 250 | 500 | - |
| | Type of fiber | | Cloth | Cloth | Cloth | UD | UD |
| Bonding resin layer | Type of resin | | A-1+epoxy+acid anhydride | A-1 | A-1 | A-1 | A-1 |
| | Glass transition point | °C | 186 | 83 | 83 | 83 | 83 |
| | Melt viscosity | Pa·s | 250 | 90 | 90 | 90 | 90 |
| | Formation | | Prepreg E | Sheet A | Prepreg D | Prepreg A | Prepreg A |
| | Type of fiber | | Cloth | None | Cloth | UD | UD |
| | Phenoxy proportion | wt% | 77 | 100 | 100 | 100 | 100 |
| Metal plate | Type of metal | No. | M-1 | M-1 | M-1 | M-1 | M-1 |
| | | | EG | EG | EG | EG | EG |
| | Thickness | mm | 0.4 | 0.4 | 0.4 | 0.4 | 0.4 |
| Physical properties, evaluation items | Bending strength | MPa | 550 | 538 | 541 | 735 | 533 |
| | Flexural modulus | GPa | 51 | 50 | 50 | 54 | 61 |
| | Metal peeling off | | ○ | ○ | ○ | ○ | ○ |
| | Shear bonding | N/5 mm | 700 | 507 | 455 | 490 | 460 |

[Table 3]

| | | | Example 11 | Example 12 | Example 13 | Example 14 | Example 15 |
|---|---|---|---|---|---|---|---|
| CFRP layer | Prepreg used | | D | A | A | c | c |
| | Type of matrix resin | | A-1 | A-1 | A-1 | A-1+epoxy+acid anhydride | A-1+epoxy+acid anhydride |
| | Glass transition point | °C | 83 | 83 | 83 | 186 | 186 |
| | Melt viscosity | Pa·s | 90 | 90 | 90 | 250 | 250 |
| | Type of fiber | | Cloth | UD | UD | UD | UD |
| Bonding resin layer | Type of resin | | A-1 | A-1 | A-1 | A-1+epoxy+acid anhydride | A-1+epoxy+acid anhydride |
| | Glass transition point | °C | 83 | 83 | 83 | 186 | 186 |
| | Melt viscosity | Pa·s | 90 | 90 | 90 | 250 | 250 |
| | Formation | | Sheet A | Prepreg A | Prepreg A | Prepreg C | Prepreg C |
| | Type of fiber | | None | UD | UD | UD | UD |
| | Phenoxy proportion | wt% | 100 | 100 | 100 | 77 | 80 |
| Metal plate | Type of metal | No. | M-1 | M-2 | M-3 | M-2 | M-3 |
| | | | EG | Aluminum | SUS steel | Aluminum | SUS steel |
| | Thickness | mm | 0.4 | 1 | 0.4 | 1 | 0.4 |
| Physical properties, evaluation items | Bending strength | MPa | 728 | 593 | 667 | 794 | 791 |
| | Flexural modulus | GPa | 57 | 53 | 69 | 54 | 67 |
| | Metal peeling off | | ○ | ○ | ○ | ○ | ○ |
| | Shear bonding | N/5 mm | 535 | 244 | 299 | 307 | 307 |

[Table 4]

| | | | Comparative Example 1 | Comparative Example 2 | Comparative Example 3 | Comparative Example 4 | Comparative Example 5 |
|---|---|---|---|---|---|---|---|
| CFRP layer | Prepreg used | | F | G | H | K | D |
| | Type of matrix resin | | PA | PC | PP | Epoxy | A-1 |
| | Glass transition point | °C | - | - | - | - | 83 |
| | Melt viscosity | Pa·s | - | - | - | - | 90 |
| | Type of fiber | | UD | UD | UD | Cloth | Cloth |
| Bonding resin layer | Type of resin | | None | None | None | None | None |
| | Glass transition point | °C | - | - | - | - | - |
| | Melt viscosity | Pa·s | - | - | - | - | - |
| | Formation | | - | - | - | - | - |
| | Type of fiber | | - | - | - | - | - |
| | Phenoxy proportion | wt% | - | - | - | - | - |
| Metal plate | Type of metal | No. | M-1 | M-1 | M-1 | M-1 | M-1 |
| | | | EG | EG | EG | EG | EG |
| | Thickness | mm | 0.4 | 0.4 | 0.4 | 0.4 | 0.4 |
| Physical properties, evaluation items | Bending strength | MPa | 450 | 112 | 138 | 641 | 181 |
| | Flexural modulus | GPa | 76 | 16 | 17 | 48 | 17 |
| | Metal peeling off | | × | × | × | × | × |
| | Shear bonding | N/5 mm | 340 | 280 | 40 | 590 | 30 |

[Table 5]

| | | | Comparative Example 6 | Comparative Example 7 | Comparative Example 8 | Comparative Example 9 |
|---|---|---|---|---|---|---|
| CFRP layer | Prepreg used | | D | D | F | G |
| | Type of matrix resin | | A-1 | A-1 | PA | PC |
| | Glass transition point | °C | 83 | 83 | - | - |
| | Melt viscosity | Pa·s | 90 | 90- | - | - |
| | Type of fiber | | Cloth | Cloth | UD | UD |
| Bonding resin layer | Type of resin | | Epoxy | A-1+PA | None | None |
| | Glass transition point | °C | - | - | - | - |
| | Melt viscosity | Pa·s | - | 221 | - | - |
| | Formation | | Cloth | Powder c | - | - |
| | Type of fiber | | None | None | - | - |
| | Phenoxy proportion | wt% | - | 20 | - | - |
| Metal plate | Type of metal | No. | M-1 | M-1 | M-2 | M-2 |
| | | | EG | EG | Aluminum | Aluminum |
| | Thickness | mm | 0.4 | 0.4 | 1 | 1 |
| Physical properties, evaluation items | Bending strength | MPa | 633 | Measurement is not possible | 194 | 91 |
| | Flexural modulus | GPa | 59 | Measurement is not possible | 24 | 8 |
| | Metal peeling off | | × | × | × | × |
| | Shear bonding | N/5 mm | 126 | Measurement is not possible | 127 | 76 |

[Table 6]

| | | | Comparative Example 10 | Comparative Example 11 | Comparative Example 12 | Comparative Example 13 |
|---|---|---|---|---|---|---|
| CFRP layer | Prepreg used | | H | F | G | H |
| | Type of matrix resin | | PP | PA | PC | PP |
| | Glass transition point | °C | - | - | - | - |
| | Melt viscosity | Pa·s | - | - | - | - |
| | Type of fiber | | UD | UD | UD | UD |
| Bonding resin layer | Type of resin | | None | None | None | None |
| | Glass transition point | °C | - | - | - | - |
| | Melt viscosity | Pa·s | - | - | - | - |
| | Formation | | - | - | - | - |
| | Type of fiber | | - | - | - | - |
| | Phenoxy proportion | wt% | - | - | - | - |
| Metal plate | Type of metal | No. | M-2 | M-3 | M-3 | M-3 |
| | | | Aluminum | SUS steel | SUS steel | SUS steel |
| | Thickness | mm | 1 | 0.4 | 0.4 | 0.4 |
| Physical properties, evaluation items | Bending strength | MPa | 68 | 236 | 548 | 230 |
| | Flexural modulus | GPa | 18 | 53 | 55 | 20 |
| | Metal peeling off | | × | × | × | × |
| | Shear bonding | N/5 mm | 4 | 60 | 220 | 8 |

As shown in Table 1 to Table 6, Examples 1 to 15 in which a cured product of a bonding resin composition containing 50 parts by weight or more of the phenoxy resin (A) in 100 parts by weight of resin components was provided as the bonding resin layers 103 and 103A had more excellent mechanical strength and shear bonding strength than Comparative Examples 1 to 5, and 8 to 13 in which no bonding resin layer was provided. In particular, there was a remarkable phenomenon in which, when samples of examples were subjected to the bending test, peeling off of the metal member 101 and the FRP layer 102 did not occur unlike comparative examples, and the results were significantly different from those of Comparative Examples 1 to 3 in which the thermoplastic resin was used as the matrix resin and Comparative Example 4 in which a general epoxy resin was used as the matrix resin.

In addition, in examples, it was confirmed that, for example, even when an iron alloy (Example 13 and Example 15) and aluminum (Example 12 and Example 14) which is a light metal known as a hardly-bondable material were combined, the obtained metal/fiber-reinforced resin material composite body exhibited favorable mechanical strength and shear bondability. The results were more excellent than those of polyamide, polycarbonate, and polypropylene CFRPs (Comparative Examples 8 to 13) in which combination was performed with the same configuration, and great effectiveness of the present invention was exhibited.

While embodiments of the present invention have been described above in detail for the purpose of exemplification, the present invention is not limited to the embodiments.

Priority is claimed on Japanese Patent Application No. 2016-256617, filed December 28, 2016, and Japanese Patent Application No. 2017-073196 filed March 31, 2017, the content of which is incorporated herein by reference.

[Reference Signs List]

> 100, 200 Metal-FRP composite body
> 101 Metal member
> 102 FRP layer
> 103, 103A Bonding resin layer
> 104 Matrix resin
> 105 Reinforced-fiber material
> 106 Matrix resin
> 107 Reinforced-fiber material
> 110 Coating film
> 110A, 110B Bonding sheet
> 111 FRP molding prepreg

**Claims**

1. A metal/fiber-reinforced resin material composite body, comprising:

   > a metal member;
   > a first fiber-reinforced resin material that is combined with the metal member; and
   > a bonding resin layer which is laminated on at least one surface of the metal member and interposed between the metal member and the first fiber-reinforced resin material for bonding them together,
   > wherein the bonding resin layer contains a solidified product of a phenoxy resin (A) alone or a cured product of a bonding resin composition containing 50 parts by weight or more of a phenoxy resin (A) in 100 parts by weight of resin components.

2. The metal/fiber-reinforced resin material composite body according to claim 1,
   wherein the bonding resin layer is a second fiber-reinforced resin material including the solidified product as a matrix resin, or including the cured product and a reinforced fiber base material contained in the matrix resin.

3. The metal/fiber-reinforced resin material composite body according to claim 1 or 2,
   wherein the bonding resin composition is a crosslinkable bonding resin composition which further contains an epoxy resin (B) in a range of 5 to 85 parts by weight with respect to 100 parts by weight of the phenoxy resin (A) and a crosslinking agent (C) containing an acid dianhydride, and
   wherein the cured product is a cross-linked cured product and a glass transition temperature (Tg) thereof is 160 °C or higher.

4. The metal/fiber-reinforced resin material composite body according to any one of claims 1 to 3,
   wherein a material of the metal member is a steel material, an iron alloy or aluminum.

5. A metal/fiber-reinforced resin material composite body, comprising:

   > a metal member;
   > a first fiber-reinforced resin material that is combined with the metal member; and
   > a bonding resin layer which is laminated on at least one surface of the metal member and interposed between the metal member and the first fiber-reinforced resin material for bonding them together,
   > wherein the bonding resin layer comprises a cured product in a first cured state using a bonding resin containing 50 parts by weight or more of a phenoxy resin (A) in 100 parts by weight of resin components, and
   > wherein, before and after the bonding resin changes from a cured product in a first cured state to a cross-linked cured product in a second cured state due to heating, a glass transition temperature (Tg) varies.

6. The metal/fiber-reinforced resin material composite body according to claim 5,

wherein the bonding resin layer is a second fiber-reinforced resin material containing a reinforced fiber base material in a matrix resin, and the matrix resin is the cured product in the first cured state.

7. A bonding sheet that bonds a metal member and a fiber-reinforced resin material,
   wherein the bonding sheet is a prepreg which comprises
   a bonding resin composition that contains a phenoxy resin (A) alone or 50 parts by weight or more of a phenoxy resin (A) in 100 parts by weight of resin components; and
   a reinforced fiber base material.

8. A method for producing a metal/fiber-reinforced resin material composite body which comprises a metal member, a first fiber-reinforced resin material that is combined with the metal member, and a bonding resin layer which is laminated on at least one surface of the metal member and interposed between the metal member and the first fiber-reinforced resin material for bonding them together, the method comprises:

   a process in which a bonding resin composition containing a phenoxy resin (A) alone or 50 parts by weight or more of a phenoxy resin (A) in 100 parts by weight of resin components is applied to the metal member to form a coating film; and
   a process in which a first prepreg which is a precursor of the first fiber-reinforced resin material is disposed on the coating film, according to heating and pressing, the phenoxy resin (A) in the coating film is melted and then solidified or the bonding resin composition is melted and then cured, and thereby the bonding resin layer is formed, and the first fiber-reinforced resin material and the metal member are adhered and combined.

9. A method for producing a metal/fiber-reinforced resin material composite body which comprises a metal member, a first fiber-reinforced resin material that is combined with the metal member, and a bonding resin layer which is laminated on at least one surface of the metal member and interposed between the metal member and the first fiber-reinforced resin material for bonding them together, and in which the bonding resin layer is a second fiber-reinforced resin material including a matrix resin and a reinforced fiber base material contained in the matrix resin, the method comprises:

   a process in which a fine powder of a phenoxy resin (A) alone or a bonding resin composition which contains 50 parts by weight or more of a phenoxy resin (A) in 100 parts by weight of resin components and is solid at room temperature, is attached to the reinforced fiber base material by powder coating to produce a second prepreg which is a precursor of the second fiber-reinforced resin material and has a resin composition proportion (RC) in a range of 20 to 50%; and
   a process in which the metal member, the second prepreg, and a first prepreg which is a precursor of the first fiber-reinforced resin material are laminated and disposed in this order, according to heating and pressing, the phenoxy resin (A) is melted and then solidified or the bonding resin composition is melted and then cured, and thereby the bonding resin layer is formed, and the first fiber-reinforced resin material and the metal member are adhered and combined.

FIG. 1

FIG. 2

FIG. 3

200

105
104 }102

n

105
104 }102
107
106 }103A
101

# FIG. 4

( a )

110
101

( b )

111

110
101

( c )

100

105
104 }102
103
101

# FIG. 5

( a )

111

110A

101

100

( b )

105
104 } 102

103

101

# FIG. 6

(a)

~111

~110B

~101

200

(b)

105
104 }102

107
106 }103A

101

# FIG. 7

(a)

107

(b)

108     108     107A

108     108

(c)

108A     108A     110B

108A     108A

# FIG. 8

FIG. 9

FIG. 10

FIG. 11

## INTERNATIONAL SEARCH REPORT

| International application No. |
| --- |
| PCT/JP2017/047041 |

**A. CLASSIFICATION OF SUBJECT MATTER**
Int. Cl. B32B15/08(2006.01)i, B29C43/18(2006.01)i, B29C43/28(2006.01)i,
B29C65/40(2006.01)i, C08J5/12(2006.01)i, C08J5/24(2006.01)i

According to International Patent Classification (IPC) or to both national classification and IPC

**B. FIELDS SEARCHED**

Minimum documentation searched (classification system followed by classification symbols)
Int. Cl. B32B1/00-43/00, B29B11/16, B29B15/08-15/14, C08J5/04-5/10, C08J5/24,
B29C43/18, B29C43/28, B29C65/40

Documentation searched other than minimum documentation to the extent that such documents are included in the fields searched
Published examined utility model applications of Japan    1922-1996
Published unexamined utility model applications of Japan  1971-2018
Registered utility model specifications of Japan          1996-2018
Published registered utility model applications of Japan  1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2013-40299 A (DAINIPPON PRINTING CO., LTD.) 28 February 2013, claims, paragraphs [0028], [0037]-[0038], [0044], [0046], embodiment 1 (Family: none) | 1-2, 4-7 |
| X | JP 2002-347172 A (SUMITOMO BAKELITE CO., LTD.) 04 December 2002, claims, paragraphs [0016]-[0019], [0025]-[0037] & US 2002/0185221 A1, claims, paragraphs [0043]-[0048], embodiments & EP 1555121 A1 & DE 60207779 T & TW 521033 B & KR 10-2002-0090333 A | 1, 4, 8 |

☒  Further documents are listed in the continuation of Box C.      ☐  See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| | |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2017/047041 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | WO 2016/152856 A1 (NIPPON STEEL & SUMIKIN CHEMICAL CO., LTD.) 29 September 2016, claims, paragraphs [0026]-[0029], [0043]-[0045], [0047]-[0050], [0062] & TW 201706476 A | 1-7, 9 |
| X<br>Y | JP 2000-336242 A (MATSUSHITA ELECTRIC WORKS, LTD.) 05 December 2000, claims, paragraphs [0018]-[0026], embodiments 1, 5, 7 (Family: none) | 1-8<br>4 |
| X<br>Y | JP 8-277336 A (HITACHI CHEMICAL CO., LTD.) 22 October 1996, claims, paragraphs [0009]-[0010], [0026]-[0027], embodiments 1-7 (Family: none) | 1-2, 5-7<br>4 |
| X | JP 4-144187 A (HITACHI CHEMICAL CO., LTD.) 18 May 1992, claims, pp.2, upper left column, lines 6-16 (Family: none) | 1, 8 |
| A | JP 7-223294 A (TOSHIBA CHEMICAL CORP.) 22 August 1995, claims, paragraph [0009] (Family: none) | 1-9 |
| A | JP 2006-297929 A (TORAY INDUSTRIES, INC.) 02 November 2006, claims, paragraph [0025] (Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009116484 A
- JP 2011240620 A
- JP 2016003257 A
- JP 2015212085 A
- WO 2016152856 A
- JP 2015536850 W
- JP 5999721 B
- JP 2016256617 A
- JP 2017073196 A